(19) Europäisches Patentamt
European Patent Office
Office européen des brevets

(11) **EP 4 645 774 A1**

(12) **EUROPEAN PATENT APPLICATION**
published in accordance with Art. 153(4) EPC

(43) Date of publication:
**05.11.2025 Bulletin 2025/45**

(21) Application number: **22969645.5**

(22) Date of filing: **29.12.2022**

(51) International Patent Classification (IPC):
*H04L 27/00* (2006.01)

(52) Cooperative Patent Classification (CPC):
**H04L 27/00**

(86) International application number:
**PCT/CN2022/143208**

(87) International publication number:
**WO 2024/138494 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HUANG, Yingpei**
  **Dongguan, Guangdong 523860 (CN)**
• **CHEN, Wenhong**
  **Dongguan, Guangdong 523860 (CN)**
• **SHI, Zhihua**
  **Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD, TERMINAL DEVICE, AND NETWORK DEVICE**

(57) Provided in the present application are a wireless communication method, a terminal device, and a network device. The terminal device reports indexes of Q TD base vectors in first UCI, that is, the first UCI can reflect a time variation characteristic of a channel within a period of time. Therefore, a network device can perform downlink transmission on the basis of the first UCI, thereby facilitating an improvement in the transmission performance. The wireless communication method comprises: a terminal device sending first UCI, wherein the first UCI comprises indexes of L SD base vectors, indexes of $M_V$ FD base vectors, and indexes of Q TD base vectors; each SD base vector is a two-dimensional DF'T vector with a length of $N_1N_2$; each FD base vector is a DF'T vector with a length of $N_3$; each TD base vector is a DFT vector with a length of $N_4$; and $N_1$, $N_2$, $N_3$, $N_4$, L, $M_V$ and Q are all positive integers.

**200**

Terminal device

Network device

S210, transmitting, by a terminal device, first UCI, where the first UCI includes: indexes of L SD basis vectors, indexes of $M_V$ FD basis vectors, and indexes of Q TD basis vectors; where the SD basis vector is a two-dimensional DFT vector with a length of $N_1N_2$, the FD basis vector is a DFT vector with a length of $N_3$, and the TD basis vector is a DFT vector with a length of $N_4$, where $N_1$, $N_2$, $N_3$, $N_4$, L, $M_V$ and Q are all positive integers

S220, receiving, by a network device, the first UCI

FIG. 3

**Description**

## TECHNICAL FIELD

Embodiments of the present disclosure relate to the field of communications, and specifically to a method of wireless communication, a terminal device, and a network device.

## BACKGROUND

In a new radio (NR) system, a terminal device may report a precoding matrix indicator (PMI) to a network device. Further, the network device may use a codebook corresponding to the PMI for downlink transmission. However, since the PMI cannot well reflect a channel state of the downlink channel, it leads to performance loss at low and medium Doppler frequency shifts. Therefore, how to improve the downlink transmission performance is an issue that needs to be addressed urgently.

## SUMMARY

A method of wireless communication, a terminal device and a network device are provided in the present disclosure. The terminal device reports indexes of Q TD basis vectors in first UCI. That is, the first UCI may reflect time-varying characteristics of a channel within a period of time. Therefore, the network device may perform downlink transmission based on the first UCI, which is beneficial to improving the transmission performance.

In a first aspect, a method of wireless communication is provided, including:

transmitting, by a terminal device, first uplink control information (UCI);
where the first UCI includes: indexes of L spatial domain (SD) basis vector, indexes of $M_v$ frequency domain (FD) basis vector, and indexes of Q time domain (TD) basis vector;
where an SD basis vector is a two-dimensional discrete Fourier transformation (DFT) vector with a length of $N_1N_2$, an FD basis vector is a DFT vector with a length of $N_3$, and a TD basis vector is a DFT vector with a length of $N_4$, where $N_1$, $N_2$, $N_3$, $N_4$, L, $M_v$ and Q are all positive integers.

In a second aspect, a method of wireless communication is provided, including:

receiving, by a network device, first UCI;
where the first UCI includes: indexes of L SD basis vectors, indexes of $M_v$ FD basis vectors, and indexes of Q TD basis vectors;
where an SD basis vector is a two-dimensional DFT vector with a length of $N_1N_2$, an FD basis vector is a DFT vector with a length of $N_3$, and a TD basis vector is a DFT vector with a length of $N_4$, where $N_1$, $N_2$, $N_3$, $N_4$, L, $M_v$ and Q are all positive integers.

In a third aspect, a terminal device is provided for performing the method in the first aspect or in various implementations thereof.
Specifically, the terminal device includes a functional module for performing the method in the first aspect or in various implementations thereof.
In a fourth aspect, a network device is provided for performing the method in the second aspect or in various implementations thereof.
Specifically, the network device includes a functional module for performing the method in the second aspect or in various implementations thereof.
In a fifth aspect, a terminal device is provided, and includes a processor and a memory. The memory is configured to store a computer program, and the processor is configured to call the computer program stored in the memory and run the computer program to perform the method in the first aspect or in various implementations thereof.
In a sixth aspect, a network device is provided, and includes a processor and a memory. The memory is configured to store a computer program, and the processor is configured to call the computer program stored in the memory and run the computer program to perform the method in the second aspect or in various implementations thereof.
In a seventh aspect, a chip is provided for implementing the method in any of the first and second aspects or in various implementations thereof.
Specifically, the chip includes a processor configured to call a computer program from a memory and run the computer program to enable a device equipped with the apparatus to perform the method in any of the first and second aspects or in various implementations thereof.
In an eighth aspect, a computer-readable storage medium is provided for storing a computer program, where the computer program enables a computer to perform the method in any of the first and second aspects or in various implementations thereof.
In a ninth aspect, a computer program product is provided, and includes computer program instructions, where the computer program instructions enable a computer to perform the method in any of the first and second aspects or in various implementations thereof.
In a tenth aspect, a computer program is provided. The computer program, when run on a computer, enables the computer to perform the method in any of the first and second aspects or in various implementations thereof.
Through the above technical solution, the terminal device may report the indexes of the Q TD basis vectors in the first UCI. That is, the first UCI reported by the terminal device may reflect the time-varying characteristics of the channel within a period of time. Therefore, the network device may perform downlink transmission based on the first UCI, which is beneficial to improving the transmission performance. Especially in a case of medium and low mobile speeds, the system performance may be significantly improved through predicting, by the terminal device, the time-varying characteristics of the channel and reporting, by the terminal device through the UCI, the TD basis vector information that may reflect the time-varying characteristics of the channel.

## BRIEF DESCRIPTION OF THE DRAWINGS

FIG. 1 is a schematic diagram of a communication system architecture provided in the embodiments of the present disclosure.
FIG. 2 is a schematic diagram of PMI feedback in the related art.
FIG. 3 is a schematic interaction diagram of a method of wireless communication provided in accordance with the embodiments of the present disclosure.
FIG. 4 is a schematic diagram of an FD basis vector 0 (the strongest coefficient) provided in accordance with the embodiments of the present disclosure.
FIG. 5 is a schematic block diagram of a terminal device provided in accordance with the embodiments of the present disclosure.
FIG. 6 is a schematic block diagram of a network device provided in accordance with the embodiments of the present disclosure.
FIG. 7 is a schematic block diagram of a communication device provided in accordance with the embodiments of the present disclosure.
FIG. 8 is a schematic block diagram of a chip provided in accordance with the embodiments of the present disclosure.
FIG. 9 is a schematic block diagram of a communication system provided in accordance with the embodiments of the present disclosure.

## DETAILED DESCRIPTION

The technical solutions in the embodiments of the present disclosure will be described below in conjunction with the accompanying drawings in the embodiments of the present disclosure. Obviously, the described embodiments are merely some but not all of the embodiments of the present disclosure. With respect to the embodiments in the present disclosure, all other embodiments obtained by those ordinary skilled in the art without making any creative work shall fall within the scope of protection of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunication system (UMTS), wireless local area networks (WLAN), wireless fidelity (Wi-Fi), a 5th-generation (5G) communication system, or other communication systems.

Generally speaking, traditional communication systems support a limited quantity of connections, which is prone to implementation. However, with the development of the communication technology, the mobile communication system will not only support the traditional communication, but also support, for example, device to device (D2D) communication, machine to machine (M2M) communication, machine type communication (MTC), vehicle to vehicle (V2V) communication, vehicle to everything (V2X) communication, or the like. The embodiments of the present disclosure may also be applied to these communication systems.

Optionally, the communication system in the embodiments of the present disclosure may be applied to a carrier aggregation (CA) scenario, a dual connectivity (DC) scenario, or a standalone (SA) network deployment scenario.

Optionally, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may also be considered as an unshared spectrum.

In the embodiments of the present disclosure, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device or a computing device with wireless communication functions, other processing devices connected to a wireless modem, an in-vehicle device, a wearable device, a terminal device in a next generation communication system (such as an NR network), a terminal device in a future evolved public land mobile network (PLMN), or the like.

In the embodiments of the present disclosure, the terminal device may be deployed on land, including indoor or outdoor, handheld, wearable, or in-vehicle; alternatively, the terminal device may be deployed on water (e.g., on a steamship); alternatively, the terminal device may be deployed in air (e.g., on an airplane, on a balloon, or on a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in smart home, or the like.

By way of example and not limitation, in the embodiments of the present disclosure, the terminal device may also be a wearable device. The wearable device may also be referred to as a wearable smart device, which is a general term for wearable devices developed by performing intellectualized design on daily wear (such as glasses, gloves, a watch, clothing, or shoes) using wearable technologies. The wearable device is a portable device that is worn directly on a body, or integrated into the clothes or accessories of users. The wearable device is not only a hardware device, but also implements powerful functions through software support as well as data interaction or cloud interaction. Generalized wearable smart devices include devices (such as a smart watch or smart glasses) that are fully functional, large in size and may implement full or partial functions without relying on smart phones, and devices (such as various smart bracelets or smart jewelries for monitoring physical signs) that only focus on a certain type of application function and need to be used in conjunction with other devices (such as a smart phone).

In the embodiments of the present disclosure, the network device may be a device for communicating with a mobile device. The network device may be an access point (AP) in WLAN, a base station (Base Transceiver Station, BTS) in the GSM or CDMA, a base station (NodeB, NB) in the WCDMA, an evolved base station (Evolutional NodeB, eNB or eNodeB) in the LTE, a relay station or an access point, an in-vehicle device, a wearable device, a network device (gNB) in the NR network, a network device in the future evolved PLMN network, a network device in the NTN network, or the like.

By way of example and not limitation, in the embodiments of the present disclosure, the network device may have a mobile characteristic. For example, the network device may be a moveable device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station disposed on land, water, or the like.

In the embodiments of the present disclosure, the network device may provide a service for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cells here may include: a metro cell, a micro cell, a pico cell, a femto cell, etc. These small cells have characteristics of small coverage range and a low transmission power, which are suitable for providing high-speed data transmission services.

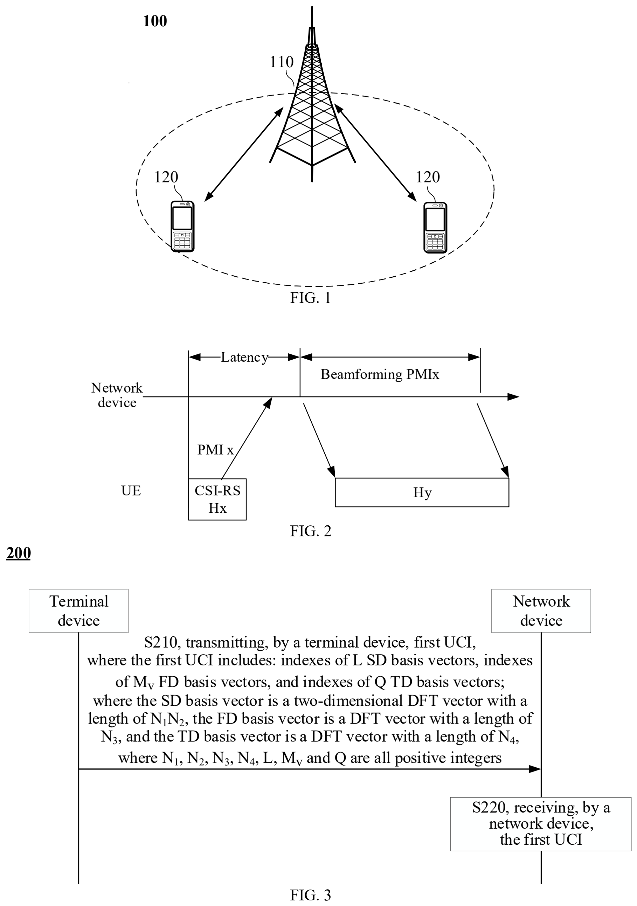

For example, a communication system 100 applied by the embodiments of the present disclosure is illustrated in FIG. 1. The communication system 100 may include a network device 110, and the network device 110 may be a device for communicating with terminal devices 120 (or referred to as communication terminals or terminals). The network device 110 may provide communication coverage for a specific geographical area and may communicate with terminal devices located within the coverage area.

FIG. 1 exemplarily illustrates one network device and two terminal devices. Optionally, the communication system 100 may include multiple network devices and may include another number of terminal devices within the coverage area of each network device, which is not limited in the embodiments of the present disclosure.

Optionally, the communication system 100 may further include other network entities, such as a network controller and a mobility management entity, which is not limited in the embodiments of the present disclosure.

It should be understood that in the embodiments of the present disclosure, a device with a communication function in the network/system may be referred to as a communication device. Taking the communication system 100 illustrated in FIG. 1 as an example, the communication device may include a network device 110 with a communication function and a terminal device 120 with a communication function. The network device 110 and the terminal device 120 may be the specific devices described above and will not be repeated here. The communication devices may further include other devices in the communication system 100, such as a network controller, a mobile management entity or other network entities, which is not limited in the embodiments of the present disclosure.

It should be understood that terms "system" and "network" are often used interchangeably herein. The term "and/or" herein is only an association relationship to describe associated objects, indicating that there may be three kinds of relationships. For example, "A and/or B" may represent three cases: A alone, both A and B, and B alone. In addition, a character "/" herein generally indicates that the associated objects before and after this character are in an "or" relationship.

It should be understood that the term "indicate" mentioned in the embodiments of the present disclosure may mean a direct indication or an indirect indication, or represent an association relationship. By way of example, A indicating B may mean that A directly indicates B, for example, B may be obtained through A; alternatively, A indicating B may mean that A indirectly indicates B, for example, A indicates C, and B may be obtained through C; alternatively, A indicating B may mean that there is an association relationship between A and B.

The term "corresponding" described in the embodiments of the present disclosure may mean that there is a direct correspondence or an indirect correspondence between the two, or may mean that there is an association relationship between the two, or may mean a relationship of indicating and being indicated, a relationship of configuring and being configured, or the like.

In the embodiments of the present disclosure, the term "being predefined" may be implemented by pre-saving corresponding codes, tables or other manners that may be used to indicate related information in the device (e.g., including the terminal device and the network device), and the present disclosure does not limit its specific implementation. For example, the "being predefined" may refer to a definition in a protocol.

In the embodiments of the present disclosure, the term "protocol" may refer to a standard protocol in the communication field, for example, the "protocol" may include an LTE protocol, an NR protocol, or related protocols applied in future communication systems, which will not be limited in the present disclosure.

In order to facilitate understanding of the technical solutions of the embodiments of the present disclosure, the related concepts of the frequency domain-spatial domain codebook are explained below.

In the related art, for each layer of the codebook, the frequency domain-spatial domain codebook (also referred to as NR type II codebook, or frequency domain-spatial domain joint codebook) is independently coded in the frequency domain (each sub-band). Due to the high spatial quantization accuracy, a total feedback amount is too large. By feeding back the frequency domain-spatial domain joint codebook, the feedback amount may be greatly saved while ensuring the NR performance.

The frequency domain-spatial domain codebook may be expressed as:

$$\mathbf{W} = \mathbf{W}_1 \hat{\mathbf{W}}_2 \mathbf{W}_f^H ,$$

, where W represents the frequency domain-spatial domain codebook, $\mathbf{W}_1$ represents discrete Fourier transformation (DFT) vectors of 2L spatial domain beams, and $\mathbf{W}_f$ represents DFT basis vectors of M frequency domains.

$\mathbf{W}_f^H$ represents a transpose of $\mathbf{W}_f$. $\hat{\mathbf{W}}_2$ represents weighting coefficients of a spatial frequency domain DFT vector pair, $\mathbf{W}_1$ is a matrix of size $2N_1N_2*2L$, where $N_1$ is the number of ports in a vertical direction, and $N_2$ is the number of ports in a horizontal direction. $\hat{\mathbf{W}}_2$ is a $2L*M$ matrix, where 2L is the number of rows of $\hat{\mathbf{W}}_2$, and M is the number of columns of $\hat{\mathbf{W}}_2$. $\mathbf{W}_f^H$ is an $M*N_3$ matrix, where $N_3$ is the number of DFT basis vectors in the frequency domain.

In a case where the terminal device feeds back the frequency domain-spatial domain codebook to the network device, contents reported to the network device include:

the DFT vectors of the L spatial domain beams of $\mathbf{W}_1$, the DFT basis vectors of M frequency domains of $\mathbf{W}_f$, and quantized $\hat{\mathbf{W}}_2$. The network device obtains channel state information (CSI) of each downlink layer by the product of the DFT vectors of the L spatial domain beams of $\mathbf{W}_1$, the DFT basis vectors of M frequency domains of $\mathbf{W}_f$, and the quantized $\hat{\mathbf{W}}_2$.

In some scenarios, the network device may transmit a channel state information reference signal (CSI-RS) at a time x. The UE determines the channel information at the time x through the CSI-RS, where the channel information is recorded as Hx; and further, the UE calculates a corresponding precoding matrix indicator (PMI) based on the channel information, where the PMI is recorded as PMIx, and reports the PMIx to the network device. The network device transmits a physical downlink shared channel (PDSCH) using the PMIx. A time of transmitting the PDSCH is a time y, and channel information at this time y is recorded as Hy. Due to the time-varying channel, the PMIx cannot well reflect the channel state of the Hy, affecting the downlink transmission performance.

In light of the above technical problems, the present disclosure designs an uplink control information (UCI) reporting scheme, in which the terminal device reports indexes of Q TD basis vectors in first UCI. That is, the first UCI may reflect time-varying characteristics of a channel within a period of time. Therefore, the network device may perform downlink transmission based on the first UCI, which is beneficial to improving the transmission performance.

To facilitate understanding of the technical solutions of the embodiments of the present disclosure, the technical solutions of the present disclosure are described in detail below through specific embodiments. The following related arts, as optional solutions, may be arbitrarily combined with the technical solutions in the embodiments of the present disclosure, and those combined solutions all fall within the protection scope of the embodiments of the present disclosure. The embodiments of the present disclosure include at least part of the following contents.

FIG. 3 is a schematic interaction diagram of a method of wireless communication 200 in accordance with the embodiments of the present disclosure. As illustrated in FIG. 3, the method of wireless communication 200 includes the following contents.

In S210, a terminal device transmits first UCI, where the first UCI includes: indexes of L SD basis vectors, indexes of $M_v$ FD basis vectors, and indexes of Q TD basis vectors, where the SD basis vector is a two-dimensional DFT vector with a length of $N_1N_2$, the FD basis vector is a DFT vector with a length of $N_3$, and the TD basis vector is a DFT vector with a length of $N_4$, where $N_1$, $N_2$, $N_3$, $N_4$, L, $M_v$ and Q are all positive integers.

In S220, a network device receives the first UCI.

In some embodiments, the network device may perform downlink transmission based on the first UCI.

In the embodiments of the present disclosure, the terminal device may report the indexes of the Q TD basis vectors in the first UCI. Since the first UCI includes the indexes of the Q TD basis vectors, the first UCI may reflect the time-varying characteristics of the channel within a period of time. Therefore, the network device may perform downlink transmission based on the first UCI, which is beneficial to improving the transmission performance. Especially, in a case of medium and low mobile speeds, the system performance may be significantly improved through predicting, by the terminal device, the time-varying characteristics of the channel and reporting, by the terminal device through the UCI, the TD basis vector information reflecting the time-varying characteristics of the channel.

In some embodiments, L may be predefined, or L may be determined based on a high layer parameter.

In some embodiments, $M_v$ may be predefined, or $M_v$ may be determined based on a high layer parameter.

In some embodiments, Q may be predefined, or Q may be determined based on a high layer parameter. For example, Q is fixed to 2.

It should be noted that $N_1$ represents the number of ports in the vertical direction, $N_2$ represents the number of ports in the horizontal direction, $N_3$ represents the total number of frequency domain basis vectors in the frequency domain, and $N_4$ represents the total number of time domain basis vectors in the time domain.

In some embodiments, the indexes of the Q TD basis vectors are reported through $\left\lceil \log_2 \binom{N-1}{Q-1} \right\rceil$ bits, where N is a positive integer.

In some embodiments, $N = N_4/2$; or $N = N_4$; or $N = 2Q$. Optionally, an index of a candidate TD basis vector is a window with a length of N centered at 0, that is, the index of the candidate TD basis vector is [-N/2, (N/2)-1].

In some embodiments, N is predefined, or N is determined based on a high layer parameter.

In some embodiments, in a case of Q = 2, the indexes of the Q TD basis vectors are fixed to 0 and $N_4-1$.

In some embodiments, in a case of rank v > 1, an index of a TD basis vector of each layer of all layers indicated by the rank v is selected independently, or the index of the TD basis vector of each layer of all layers indicated by the rank v is the same.

In some embodiments, the first UCI includes a first bitmap.

The first bitmap is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, indexes of $S_2$ TD-FD basis vector pairs, or at least one non-zero coefficient.

Here, the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and the non-zero coefficient consists of amplitude and phase, where S, $S_1$ and $S_2$ are all positive integers.

In some embodiments, $S_1$ and $S_2$ are predefined, or $S_1$ and $S_2$ are determined based on a high layer parameter.

In some embodiments, S is reported by the terminal device, or S is determined based on a high layer parameter. For example, in a case where S is reported by the terminal device, S is reported through a first part (part 1) in the first UCI.

In Example 1, a length of the first bitmap is $M_vQ+2LS$ bits, where a bitmap with a length of $M_vQ$ bits in the first bitmap is used to determine or indicate the indexes of the S TD-FD basis vector pairs, and a bitmap with a length of 2LS bits in the first bitmap is used to determine or indicate the at least one non-zero coefficient.

Specifically, in Example 1, the first bitmap may include two parts, one part is the bitmap with the length of $M_vQ$ bits, and the other part is the bitmap with the length of 2LS bits.

Optionally, in Example 1, in the first bitmap, $S = M_v$.

As a specific example, in Example 1, a value 1 in the first bitmap is used to indicate the index of the TD-FD basis vector pair, that is, the number of 1 contained in the bitmap with the length of $M_vQ$ bits in the first bitmap is S.

In Example 2, a length of the first bitmap is $2LM_v+SQ$ bits, where a bitmap with a length of $2LM_v$ bits in the first bitmap is used to determine or indicate the indexes of the S SD-FD basis vector pairs, and a bitmap with a length of SQ bits in the first bitmap is used to determine or indicate the at least one non-zero coefficient.

Specifically, in Example 2, the first bitmap may include two parts, one part is the bitmap with the length of $2LM_v$ bits, and the other part is the bitmap with the length of SQ bits.

As a specific example, in Example 2, a value 1 in the first bitmap is used to indicate the index of the SD-FD basis vector pair, that is, the number of 1 contained in the bitmap with the length of $2LM_v$ bits in the first bitmap is S.

Optionally, in Example 2, in a case of rank v > 1, a bitmap with $2vLM_v$ bits is used to determine or indicate indexes of SD-FD basis vector pairs of all layers indicated by the rank v, where each layer of all layers indicated by the rank v corresponds to the bitmap with a length of $2LM_v$ bits.

Optionally, in Example 2, in a case of rank v > 1, a bitmap with SQv bits is used to determine or indicate non-zero coefficients of all layers indicated by the rank v, where each layer of all layers indicated by the rank v corresponds to the bitmap with a length of SQ bits.

Optionally, in the second bitmap, S = $K_0$, where $K_0$ is the number of non-zero coefficients configured by a high layer.

Optionally, in Example 2, in a case of rank v > 1, a bitmap with SQ bits is used to determine or indicate non-zero coefficients of all layers indicated by the rank v, where S = $2K_0$, or S = $2K_0$ with the number of non-zero coefficients of each layer indicated by the rank v satisfying less than or equal to $K_0$, where $K_0$ is the number of non-zero coefficients configured by a high layer.

In Example 3, a length of the first bitmap is $2LQ+SM_v$ bits, where a bitmap with a length of 2LQ bits in the first bitmap is used to determine or indicate the indexes of the S SD-TD basis vector pairs, and a bitmap with a length of $SM_v$ bits in the first bitmap is used to determine or indicate the at least one non-zero coefficient.

Specifically, in Example 3, the first bitmap may include two parts, one part is the bitmap with the length of 2LQ bits, and the other part is the bitmap with the length of $SM_v$ bits.

As a specific example, in Example 3, a value 1 in the first bitmap is used to indicate the index of the SD-TD basis vector pair, that is, the number of 1 contained in the bitmap with the length of 2LQ bits in the first bitmap is S.

Optionally, in Example 3, in a case of rank v > 1, the bitmap with 2LQ bits is used to determine or indicate an index of an SD-TD basis vector pair of each layer indicated by the rank v, or a bitmap with 2LQv bits is used to determine or indicate indexes of SD-TD basis vector pairs of all layers indicated by the rank v; and/or
in a case of rank v > 1, the bitmap with $SM_v$ bits is used to determine or indicate a non-zero coefficient of each layer indicated by the rank v (that is, non-zero coefficients of all layers indicated by the rank v are determined or indicated through a bitmap with a length of $vSM_v$ bits).

Optionally, in Example 3, in a case of rank v > 1, the bitmap with 2LQ bits is used to determine or indicate indexes of SD-TD basis vector pairs of all layers indicated by the rank v; and/or
in a case of rank v > 1, the bitmap with $SM_v$ bits is used to determine or indicate a non-zero coefficient of each layer indicated by the rank v (that is, non-zero coefficients of all layers indicated by the rank v are determined or indicated through a bitmap with a length of $vSM_v$ bits).

Optionally, in Example 3, in the third bitmap, S = 2L, where 2L is the number of SD basis vectors configured by a high layer.

In Example 4, a length of the first bitmap is $LQ+2SM_v$ bits, where a bitmap with a length of LQ bits in the first bitmap is used to determine or indicate the indexes of the S SD-TD basis vector pairs, and a bitmap with a length of $2SM_v$ bits in the first bitmap is used to determine or indicate the at least one non-zero coefficient.

Specifically, in Example 4, the first bitmap may include two parts, one part is the bitmap with the length of LQ bits, and the other part is the bitmap with the length of $2SM_v$ bits.

As a specific example, in Example 4, a value 1 in the first bitmap is used to indicate the index of the SD-TD basis vector pair, that is, the number of 1 contained in the bitmap with the length of LQ bits in the first bitmap is S.

Optionally, in Example 4, in a case of rank v > 1, the bitmap with LQ bits is used to determine or indicate an index of an SD-TD basis vector pair of each layer indicated by the rank v, or a bitmap with LQv bits is used to determine or indicate indexes of SD-TD basis vector pairs of all layers indicated by the rank v; and/or
in a case of rank v > 1, the bitmap with $2SM_v$ bits is used to determine or indicate a non-zero coefficient of each layer indicated by the rank v (that is, non-zero coefficients of all layers indicated by the rank v are determined or indicated through a bitmap with length of 2vSM, bits).

Optionally, in Example 4, in a case of rank v > 1, the bitmap with LQ bits is used to determine or indicate indexes of SD-TD basis vector pairs of all layers indicated by the rank v; and/or
in a case of rank v > 1, the bitmap with $2SM_v$ bits is used to determine or indicate a non-zero coefficient of each layer indicated by the rank v (that is, non-zero coefficients of all layers indicated by the rank v are determined or indicated through a bitmap with a length of 2vSM, bits).

Optionally, in Example 4, in the first bitmap, S = L, where L is the number of SD basis vectors configured by a high layer.

In Example 5, a length of the first bitmap is $S_1S_2+2LQ_1+M_vQ_2$ bits, where $Q_1Q_2$= Q.

A bitmap with a length of $2LQ_1$ bits in the first bitmap is used to determine or indicate the indexes of the $S_1$ SD-TD basis vector pairs, a bitmap with a length of $M_vQ_2$ bits in the first bitmap is used to determine or indicate the indexes of the $S_2$ TD-FD basis vector pairs, and a bitmap with a length of $S_1S_2$ bits in the first bitmap is used to determine or indicate the at least one non-zero coefficient.

Specifically, in Example 5, the first bitmap may include three parts, one part is the bitmap with the length of $S_1S_2$ bits, another part is the bitmap with the length of $2LQ_1$ bits, and still another part is the bitmap with the length of $M_vQ_2$ bits.

In Example 6, a length of the first bitmap is $2LM_vQ$ bits, and the first bitmap is used to determine or indicate the at least one non-zero coefficient corresponding to an index of a TD-FD-SD basis vector pair; where the TD-FD-SD basis vector pair consists of one TD basis vector of the Q TD basis vectors, one FD vector of the $M_v$ FD basis vectors, and one SD basis vector of the L SD basis vectors.

In some embodiments, the first bitmap is located in a second part (part 2) of the first UCI.

In some embodiments, the first bitmap is located in at least one group in the second part of the first UCI.

In some embodiments, the first bitmap is mapped to the at least one group based on a preconfigured priority order.

As a specific example, the second part (part 2) of the first UCI is divided into a group 0, a group 1 and a group 2. Based on the preconfigured priority order, pieces of bitmap information of the first bitmap may be mapped to the group 0, the group 1 and the group 2 separately in a priority order from high to low. For example, in the first bitmap with the length of $S_1S_2+2LQ_1 +M_vQ_2$ bits in Example 5 described above, the bitmap with the length of $2LQ_1$ may be mapped to the group 0, the bitmap with the length of $M_vQ_2$ may be mapped to the group 1, and the bitmap with the length of $S_1S_2$ may be mapped to the group 2.

In some embodiments, the first UCI includes a first indicator.

The first indicator is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, or indexes of $S_2$ TD-FD basis vector pairs.

Here, the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, and the SD-TD basis vector pair consists of one SD basis vector of the L SD basis vectors and one TD basis vector of the Q TD basis vectors, where S, $S_1$ and $S_2$ are all positive integers.

In some embodiments, $S_1$ and $S_2$ are predefined, or $S_1$ and $S_2$ are determined based on a high layer parameter.

In some embodiments, S is reported by the terminal device, or S is determined based on a high layer parameter. For example, in a case where S is reported by the terminal device, S is reported through the first part (part 1) of the first UCI.

In Example 11, a bit length of the first indicator is $\left\lceil \log_2 \binom{M_vQ}{S} \right\rceil$ bits, and the first indicator is used to determine or indicate the indexes of the S TD-FD basis vector pairs. Optionally, S = $M_v$.

In Example 12, a length of the first indicator is $\left\lceil \log_2 \binom{2LM_v}{S} \right\rceil$ bits, and the first indicator is used to determine or indicate the indexes of the S SD-FD basis vector pairs. Optionally, S = $K_0$, where $K_0$ is the number of non-zero coefficients configured by a high layer.

In Example 13, a length of the first indicator is $\left\lceil \log_2 \binom{2LQ}{S} \right\rceil$ bits, and the first indicator is used to determine or indicate the indexes of the S SD-TD basis vector pairs.

Optionally, in Example 13, in a case of rank v > 1, $\left\lceil \log_2 \binom{2LQ}{S} \right\rceil$ bits are used to determine or indicate an index of an SD-TD basis vector pair of each layer indicated by the rank v, or $\left\lceil v\log_2 \binom{2LQ}{S} \right\rceil$ bits are used to determine or indicate the indexes of the SD-TD basis vector pairs of all layers indicated by the rank v, or $\left\lceil \log_2 \binom{2LQ}{S} \right\rceil$ bits are used to determine or indicate the indexes of the SD-TD basis vector pairs of all layers indicated by the rank v.

Optionally, in Example 13, S = 2L, where 2L is the number of SD basis vectors configured by a high layer.

In Example 14, a length of the first indicator is $\left\lceil \log_2 \binom{LQ}{S} \right\rceil$ bits, and the first indicator determines or indicates the indexes of the S SD-TD basis vector pairs.

Optionally, in Example 14, in a case of rank v > 1, $\left\lceil \log_2 \binom{LQ}{S} \right\rceil$ bits are used to determine or indicate an index of an SD-TD basis vector pair of each layer indicated by the rank v, or $\left\lceil v\log_2 \binom{LQ}{S} \right\rceil$ bits are used to determine or indicate indexes of SD-TD basis vector pairs of all layers indicated by the rank v, or $\left\lceil \log_2 \binom{LQ}{S} \right\rceil$ bits are used to determine or indicate the indexes of the SD-TD basis vector pairs of all layers indicated by the rank v.

Optionally, in Example 14, S = L, where L is the number of SD basis vectors configured by a high layer.

In Example 15, the first indicator includes first sub-information and/or second sub-information; where a length of the first sub-information is $\left\lceil \log_2 \binom{2LQ_1}{S_1} \right\rceil$ bits, and the first sub-information is used to determine or indicate the indexes of the $S_1$ SD-TD basis vector pairs; and a length of the second sub-information is $\left\lceil \log_2 \binom{M_vQ_2}{S_2} \right\rceil$ bits, and the second sub-information is used to determine or indicate the indexes of the $S_2$ TD-FD basis vector pairs, where $Q_1Q_2$ = Q.

In some embodiments, the first indicator is located in the second part of the first UCI.

In some embodiments, the first indicator is located in at least one group in the second part of the first UCI.

In some embodiments, the first indicator is mapped to the at least one group based on a preconfigured priority order.

As a specific example, the second part (part 2) of the first UCI is divided into a group 0, a group 1 and a group 2. Based on the preconfigured priority order, pieces of bit information of the first indicator may be mapped to the group 0, the group 1 and the group 2 separately in a priority order from high to low. For example, in Example 15 described above, the first sub-information may be mapped to the group 0, and the second sub-information may be mapped to the group 1.

In some embodiments, the first UCI further includes at least one non-zero coefficient, where the non-zero coefficient consists of amplitude and phase.

In some embodiments, the at least one non-zero coefficient is located in the second part (part 2) of the first UCI.

In some embodiments, the at least one non-zero coefficient is located in at least one group in the second part of the first UCI.

In some embodiments, the at least one non-zero coefficient is mapped to the at least one group based on a preconfigured priority order.

In some embodiments, the network device preconfigures the priority order through radio resource control (RRC) signaling.

As a specific example, the second part (part 2) of the first UCI is divided into a group 0, a group 1 and a group 2. The non-zero coefficients may be mapped to the group 0, the group 1 and the group 2 separately in the preconfigured priority order from high to low.

Optionally, the group 0 may include at least one of: an index of an SD basis vector, an index of an FD basis vector, an index of a TD basis vector, a bitmap with a length of $M_vQ$, a bitmap with a length of $SQ$, a bitmap with a length of $2LQ$ (used to determine an index of an SD-TD basis vector pair, an index of an SD-FD basis vector pair, and an index of a TD-FD basis vector pair), or a bitmap with a length of $2LM_vQ$.

Optionally, the group 1 may include at least one of: an index of an FD basis vector, an index of a TD basis vector, a bitmap with a length of $M_vQ$, a bitmap with a length of $SQ$, a bitmap with a length of $2LQ$ (used to determine an index of an SD-TD basis vector pair, an index of an SD-FD basis vector pair, and an index of a TD-FD basis vector pair), amplitudes and phases of some or all of the non-zero coefficients, part or whole of a bitmap with a length of $2LM_vQ$, part or whole of a bitmap with a length of $2LS$, part or whole of a bitmap with a length of $2LM_v$, or part or whole of a bitmap with a length of $SM_v$.

Optionally, the group 2 may include at least one of: amplitudes and phases of the remaining non-zero coefficients, and the remaining part of the bitmap with the length of $2LS$, the remaining part of the bitmap with the length of $2LM_v$, or the remaining part of the bitmap with the length of $SM_v$.

As a specific example, the group 1 includes a bitmap with a length of $2vLM_vQ - \lfloor K^{NZ}/2 \rfloor$ with a high priority, and the group 2 includes a bitmap with a length of $\lfloor K^{NZ}/2 \rfloor$ with a low priority, where K, N and Z are all positive integers, and the bitmaps each have the priority in a predefined manner.

As a specific example, the group 1 includes a bitmap with a length of $2LM_v$ whose TD basis vectors correspond to 0, and the group 2 includes a bitmap with a length of $2LM_v$ whose TD basis vectors are not 0.

In some embodiments, the first UCI includes a strongest coefficient indicator.

In some embodiments, a length of the strongest coefficient indicator is $\lceil \log_2(2L) \rceil$ bits, where an FD basis vector corresponding to a strongest coefficient is moved to FD0 by cyclic shift, and/or a TD basis vector corresponding to the strongest coefficient is moved to TD0 by cyclic shift.

Optionally, the FD basis vector corresponding to the strongest coefficient may be an FD basis vector of the $M_v$ FD basis vectors.

Optionally, the TD basis vector corresponding to the strongest coefficient may be a TD basis vector of the Q TD basis vectors.

In some embodiments, a length of the strongest coefficient indicator is $\lceil \log_2(2L) \rceil$ bits, where an FD basis vector corresponding to a strongest coefficient is moved to FD0 by cyclic shift, and a TD basis vector corresponding to the strongest coefficient is determined by $\lceil \log_2(Q) \rceil$ bits or $\lceil \log_2(2LQ) \rceil$ bits.

In some embodiments, a length of the strongest coefficient indicator is $\lceil \log_2(2L) \rceil + \lceil \log_2(Q) \rceil + \lceil \log_2(M_v) \rceil$ bits, where an SD basis vector corresponding to a strongest coefficient is determined by $\lceil \log_2(2L) \rceil$ bits, an FD basis vector corresponding to the strongest coefficient is determined by $\lceil \log_2(M_v) \rceil$ bits, and a TD basis vector corresponding to the strongest coefficient is determined by $\lceil \log_2(Q) \rceil$ bits or $\lceil \log_2(2LQM_v) \rceil$ bits.

Optionally, the SD basis vector corresponding to the strongest coefficient may be an SD basis vector of the L SD basis vectors.

In some embodiments, a length of the strongest coefficient indicator is $\lceil \log_2(2L) \rceil + \lceil \log_2(S) \rceil$ bits, where an SD basis vector corresponding to a strongest coefficient is determined by $\lceil \log_2(2L) \rceil$ bits, and a TD-FD basis vector pair corresponding to the strongest coefficient is determined by $\lceil \log_2(S) \rceil$ bits or $\lceil \log_2(2LS) \rceil$ bits, where S is a positive integer, and S = $M_v$.

In some embodiments, a length of the strongest coefficient indicator is $\lceil \log_2(S) \rceil$ bits, where an SD-TD basis vector pair corresponding to a strongest coefficient

is determined by $\lceil \log_2(S) \rceil$ bits, and an FD basis vector corresponding to the strongest coefficient is moved to FD0 by cyclic shift, where S is a positive integer, and S = 2L.

In some embodiments, a length of the strongest coefficient indicator is $\lceil \log_2(S) \rceil$ bits, where an SD-FD basis vector pair corresponding to a strongest coefficient is determined by $\lceil \log_2(S) \rceil$ bits, and a TD basis vector corresponding to the strongest coefficient is moved to TD0 by cyclic shift, where S is a positive integer, and S = $K_0$, $K_0$ being the number of non-zero coefficients configured by a high layer.

In some embodiments, a length of the strongest coefficient indicator is $\lceil \log_2(S) \rceil + \lceil \log_2(Q) \rceil$ bits, where an SD-FD basis vector pair corresponding to a strongest coefficient is determined by $\lceil \log_2(S) \rceil$ bits, and a TD basis vector corresponding to the strongest coefficient is determined by $\lceil \log_2(Q) \rceil$ bits or $\lceil \log_2(SQ) \rceil$ bits, where S is a positive integer, and S = $K_0$, $K_0$ being the number of non-zero coefficients configured by a high layer.

In some embodiments, the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and the non-zero coefficient consists of amplitude and phase.

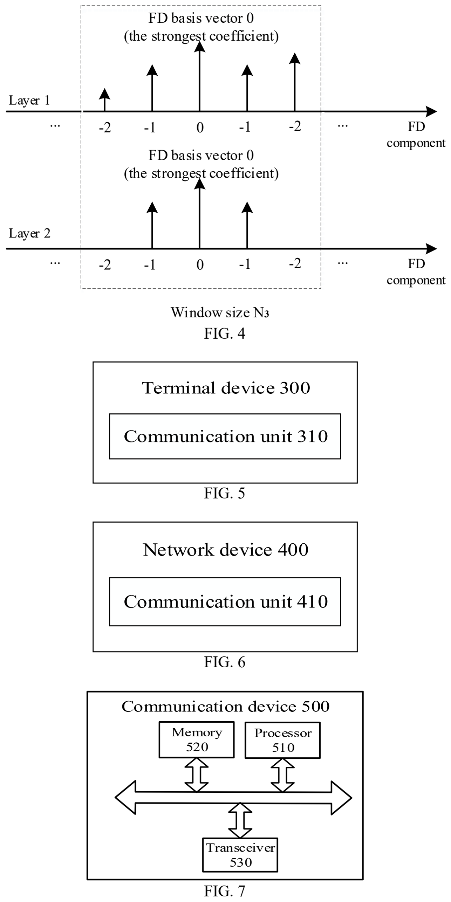

As a specific example, an FD basis vector 0 may be as illustrated in FIG. 4, and the FD basis vector corresponding to the strongest coefficient is located at FD0.

In some embodiments, the strongest coefficient indicator is located in a second part of the first UCI.

In some embodiments, S is reported by the terminal device, or S is determined based on a high layer parameter.

In some embodiments, in a case where S is reported by the terminal device, S is reported through a first part of the first UCI.

Therefore, in the embodiments of the present disclosure, the terminal device may report the indexes of the Q TD basis vectors in the first UCI. Since the first UCI includes the indexes of the Q TD basis vectors, the first UCI may reflect the time-varying characteristics of the channel within a period of time. Therefore, the network device may perform downlink transmission based on the first UCI, which is beneficial to improving the transmission performance. Especially, in a case of medium and low mobile speeds, the system performance may be significantly improved through predicting, by the terminal device, the time-varying characteristics of the channel and reporting, by the terminal device through the UCI, the TD basis vector information reflecting the time-varying characteristics of the channel.

The method embodiments of the present disclosure are described in detail above in combination with

FIGS. 3 and 4. The apparatus/device embodiments of the present disclosure will be described in detail below in combination with FIGS. 5 to 9. It should be understood that the apparatus/device embodiments and the method embodiments correspond to each other, and similar descriptions may refer to the method embodiments.

FIG. 5 illustrates a schematic block diagram of a terminal device 300 in accordance with the embodiments of the present disclosure. As illustrated in FIG. 5, the terminal device 300 includes:

a communication unit 310, configured to transmit first uplink control information (UCI);
where the first UCI includes: indexes of L spatial domain (SD) basis vectors, indexes of $M_v$ frequency domain (FD) basis vectors, and indexes of Q time domain (TD) basis vectors;
where the SD basis vector is a two-dimensional discrete Fourier transformation (DFT) vector with a length of $N_1N_2$, the FD basis vector is a DFT vector with a length of $N_3$, and the TD basis vector is a DFT vector with a length of $N_4$, where $N_1$, $N_2$, $N_3$, $N_4$, L, $M_v$ and Q are all positive integers.

In some embodiments, the indexes of the Q TD basis vectors are reported through $\left\lceil \log_2 \binom{N-1}{Q-1} \right\rceil$ bits, where N is a positive integer.

In some embodiments, N = $N_4$/2; or N = $N_4$; or N = 2Q.

In some embodiments, N is predefined, or N is determined based on a high layer parameter.

In some embodiments, the indexes of the Q TD basis vectors are fixed.

In some embodiments, in a case of Q = 2, the indexes of the Q TD basis vectors are fixed to 0 and $N_4$-1.

In some embodiments, in a case of rank v > 1, an index of a TD basis vector of each layer of all layers indicated by the rank v is selected independently, or the index of the TD basis vector of each layer of all layers indicated by the rank v is the same.

In some embodiments, the first UCI includes a first bitmap;

where the first bitmap is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, indexes of $S_2$ TD-FD basis vector pairs, or at least one non-zero coefficient;
where the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and the non-zero coefficient consists of amplitude and phase, where S, $S_1$ and $S_2$ are all positive integers.

In some embodiments, a length of the first bitmap is $M_vQ+2LS$ bits, where a bitmap with a length of $M_vQ$ bits in the first bitmap is used to determine or indicate the indexes of the S TD-FD basis vector pairs, and a bitmap with a length of 2LS bits in the first bitmap is used to determine or indicate the at least one non-zero coefficient.

In some embodiments, $S = M_v$.

In some embodiments, a length of the first bitmap is $2LM_v+SQ$ bits, where a bitmap with a length of $2LM_v$ bits in the first bitmap is used to determine or indicate the indexes of the S SD-FD basis vector pairs, and a bitmap with a length of SQ bits in the first bitmap is used to determine or indicate the at least one non-zero coefficient.

In some embodiments, in a case of rank v > 1, a bitmap with $2vLM_v$ bits is used to determine or indicate indexes of SD-FD basis vector pairs of all layers indicated by the rank v, where each layer of all layers indicated by the rank v corresponds to the bitmap with the length of $2LM_v$ bits.

In some embodiments, in a case of rank v > 1, a bitmap with SQv bits is used to determine or indicate non-zero coefficients of all layers indicated by the rank v, where each layer of all layers indicated by the rank v corresponds to the bitmap with a length of SQ bits.

In some embodiments, $S = K_0$, where $K_0$ is the number of non-zero coefficients configured by a high layer.

In some embodiments, in a case of rank v > 1, the bitmap with SQ bits is used to determine or indicate non-zero coefficients of all layers indicated by the rank v, where $S = 2K_0$, or $S = 2K_0$ with the number of non-zero coefficients of each layer indicated by the rank v satisfying less than or equal to $K_0$, where $K_0$ is the number of non-zero coefficients configured by a high layer.

In some embodiments, a length of the first bitmap is $2LQ+SM_v$ bits, where a bitmap with a length of 2LQ bits in the first bitmap is used to determine or indicate the indexes of the S SD-TD basis vector pairs, and a bitmap with a length of $SM_v$ bits in the first bitmap is used to determine or indicate the at least one non-zero coefficient.

In some embodiments, in a case of rank v > 1, the bitmap with 2LQ bits is used to determine or indicate an index of an SD-TD basis vector pair of each layer indicated by the rank v, or a bitmap with 2LQv bits is used to determine or indicate indexes of SD-TD basis vector pairs of all layers indicated by the rank v; and/or

in a case of rank v > 1, the bitmap with $SM_v$ bits is used to determine or indicate a non-zero coefficient of each layer indicated by the rank v.

In some embodiments, in a case of rank v > 1, the bitmap with 2LQ bits is used to determine or indicate indexes of SD-TD basis vector pairs of all layers indicated by the rank v; and/or

in a case of rank v > 1, the bitmap with $SM_v$ bits is used to determine or indicate a non-zero coefficient of each layer indicated by the rank v.

In some embodiments, S = 2L, where 2L is the number of SD basis vectors configured by a high layer.

In some embodiments, a length of the first bitmap is $LQ+2SM_v$ bits, where a bitmap with a length of LQ bits in the first bitmap is used to determine or indicate the indexes of the S SD-TD basis vector pairs, and a bitmap with a length of $2SM_v$ bits in the first bitmap is used to determine or indicate the at least one non-zero coefficient.

In some embodiments, in a case of rank v > 1, the bitmap with LQ bits is used to determine or indicate an index of an SD-TD basis vector pair of each layer indicated by the rank v, or a bitmap with LQv bits is used to determine or indicate indexes of SD-TD basis vector pairs of all layers indicated by the rank v; and/or

in a case of rank v > 1, the bitmap with $2SM_v$ bits is used to determine or indicate a non-zero coefficient of each layer indicated by the rank v.

In some embodiments, in a case of rank v > 1, the bitmap with LQ bits is used to determine or indicate indexes of SD-TD basis vector pairs of all layers indicated by the rank v; and/or

in a case of rank v > 1, the bitmap with $2SM_v$ bits is used to determine or indicate a non-zero coefficient of each layer indicated by the rank v.

In some embodiments, S = L, where L is the number of SD basis vectors configured by a high layer.

In some embodiments, a length of the first bitmap is $S_1S_2+2LQ_1+M_vQ_2$ bits, where $Q_1Q_2 = Q$;

where a bitmap with a length of $2LQ_1$ bits in the first bitmap is used to determine or indicate the indexes of the $S_1$ SD-TD basis vector pairs, a bitmap with a length of $M_vQ_2$ bits in the first bitmap is used to determine or indicate the indexes of the $S_2$ TD-FD basis vector pairs, and a bitmap with a length of $S_1S_2$ bits in the first bitmap is used to determine or indicate the at least one non-zero coefficient.

In some embodiments, a length of the first bitmap is $2LM_vQ$ bits, and the first bitmap is used to determine or indicate the at least one non-zero coefficient corresponding to an index of an TD-FD-SD basis vector pair;

where the TD-FD-SD basis vector pair consists of one TD basis vector of the Q TD basis vectors, one FD basis vector of the $M_v$ FD basis vectors, and one SD basis vector of the L SD basis vectors.

In some embodiments, the first bitmap is located in a second part of the first UCI.

In some embodiments, the first bitmap is located in at least one group in the second part of the first UCI.

In some embodiments, the first bitmap is mapped to the at least one group based on a preconfigured priority order.

In some embodiments, the first UCI includes a first indicator;

where the first indicator is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, or indexes of $S_2$ TD-FD basis vector pairs;

where the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, and the SD-TD basis vector pair consists of one SD basis vector of the L SD basis vectors and one TD basis vector of the Q TD basis vectors, where S, $S_1$ and $S_2$ are all positive integers.

In some embodiments, a bit length of the first indicator is $\left\lceil \log_2 \binom{M_v Q}{S} \right\rceil$ bits, and the first indicator is used to determine or indicate the indexes of the S TD-FD basis vector pairs.

In some embodiments, $S = M_v$.

In some embodiments, a length of the first indicator is $\left\lceil \log_2 \binom{2LM_v}{S} \right\rceil$ bits, and the first indicator is used to determine or indicate the indexes of the S SD-FD basis vector pairs.

In some embodiments, $S = K_0$, where $K_0$ is the number of non-zero coefficients configured by a high layer.

In some embodiments, a length of the first indicator is $\left\lceil \log_2 \binom{2LQ}{S} \right\rceil$ bits, and the first indicator is used to determine or indicate the indexes of the S SD-TD basis vector pairs.

In some embodiments, in a case of rank v > 1, the $\left\lceil \log_2 \binom{2LQ}{S} \right\rceil$ bits are used to determine or indicate an index of an SD-TD basis vector pair of each layer indicated by the rank v, or $\left\lceil v \log_2 \binom{2LQ}{S} \right\rceil$ bits are used to determine or indicate indexes of SD-TD basis vector pairs of all layers indicated by the rank v, or the $\left\lceil \log_2 \binom{2LQ}{S} \right\rceil$ bits are used to determine or indicate the indexes of the SD-TD basis vector pairs of all layers indicated by the rank v.

In some embodiments, S = 2L, where 2L is the number of SD basis vectors configured by a high layer.

In some embodiments, a length of the first indicator is $\left\lceil \log_2 \binom{LQ}{S} \right\rceil$ bits, and the first indicator determines or indicates the indexes of the S SD-TD basis vector pairs.

In some embodiments, in a case of rank v > 1, the $\left\lceil \log_2 \binom{LQ}{S} \right\rceil$ bits are used to determine or indicate an index of an SD-TD basis vector pair of each layer indicated by the rank v, or $\left\lceil v \log_2 \binom{LQ}{S} \right\rceil$ bits are used to determine or indicate indexes of SD-TD basis vector pairs of all layers indicated by the rank v, or the $\left\lceil \log_2 \binom{LQ}{S} \right\rceil$ bits are used to determine or indicate the indexes of the SD-TD basis vector pairs of all layers indicated by the rank v.

In some embodiments, S = L, where L is the number of SD basis vectors configured by a high layer.

In some embodiments, the first indicator includes first sub-information and/or second sub-information;

where a length of the first sub-information is $\left\lceil \log_2 \binom{2LQ_1}{S_1} \right\rceil$ bits, and the first sub-information is used to determine or indicate the indexes of the $S_1$ SD-TD basis vector pairs; and a length of the second sub-information is $\left\lceil \log_2 \binom{M_v Q_2}{S_2} \right\rceil$ bits, and the second sub-information is used to determine or indicate the indexes of the $S_2$ TD-FD basis vector pairs, where $Q_1 Q_2 = Q$.

In some embodiments, the first indicator is located in a second part of the first UCI.

In some embodiments, the first indicator is located in at least one group of the second part of the first UCI.

In some embodiments, the first indicator is mapped to the at least one group based on a preconfigured priority order.

In some embodiments, the first UCI includes a strongest coefficient indicator, where

a length of the strongest coefficient indicator is $\lceil \log_2(2L) \rceil$ bits, where an FD basis vector corresponding to a strongest coefficient is moved to FD0 by cyclic shift, and/or a TD basis vector corresponding to the strongest coefficient is moved to TD0 by cyclic shift; or

the length of the strongest coefficient indicator is $\lceil \log_2(2L) \rceil$ bits, where the FD basis vector corresponding to the strongest coefficient is moved to FD0 by cyclic shift, and the TD basis vector corresponding to the strongest coefficient is determined by $\lceil \log_2(Q) \rceil$ bits or $\lceil \log_2(2LQ) \rceil$ bits; or

the length of the strongest coefficient indicator is $\lceil \log_2(2L) \rceil + \lceil \log_2(Q) \rceil + \lceil \log_2(M_v) \rceil$ bits, where

an SD basis vector corresponding to the strongest coefficient is determined by $\lceil\log_2(2L)\rceil$ bits, the FD basis vector corresponding to the strongest coefficient is determined by $\lceil\log_2(M_v)\rceil$ bits, and the TD basis vector corresponding to the strongest coefficient is determined by $\lceil\log_2(Q)\rceil$ bits or $\lceil\log_2(2LQM_v)\rceil$ bits; or

the length of the strongest coefficient indicator is $\lceil\log_2(2L)\rceil+\lceil\log_2(S)\rceil$ bits, where the SD basis vector corresponding to the strongest coefficient is determined by $\lceil\log_2(2L)\rceil$ bits, a TD-FD basis vector pair corresponding to the strongest coefficient is determined by $\lceil\log_2(S)\rceil$ bits or $\lceil\log_2(2LS)\rceil$ bits, where S is a positive integer, and $S = M_v$; or

the length of the strongest coefficient indicator is $\lceil\log_2(S)\rceil$ bits, where an SD-TD basis vector pair corresponding to the strongest coefficient is determined by $\lceil\log_2(S)\rceil$ bits, and the FD basis vector corresponding to the strongest coefficient is moved to FD0 by cyclic shift, where S is a positive integer, and S = 2L; or

the length of the strongest coefficient indicator is $\lceil\log_2(S)\rceil$ bits, where an SD-FD basis vector pair corresponding to the strongest coefficient is determined by $\lceil\log_2(S)\rceil$ bits, and the TD basis vector corresponding to the strongest coefficient is moved to TD0 by cyclic shift, where S is a positive integer, and $S = K_0$, $K_0$ is the number of non-zero coefficients configured by a high layer; or

the length of the strongest coefficient indicator is $\lceil\log_2(S)\rceil+\lceil\log_2(Q)\rceil$ bits, where the SD-FD basis vector pair corresponding to the strongest coefficient is determined by $\lceil\log_2(S)\rceil$ bits, and the TD basis vector corresponding to the strongest coefficient is determined by $\lceil\log_2(Q)\rceil$ bits or $\lceil\log_2(SQ)\rceil$ bits, where S is a positive integer, and $S = K_0$, $K_0$ being the number of the non-zero coefficients configured by the high layer;

where the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and the non-zero coefficient consists of amplitude and phase.

In some embodiments, the strongest coefficient indicator is located in a second part of the first UCI.

In some embodiments, S is reported by the terminal device, or S is determined based on a high layer parameter.

In some embodiments, in a case where S is reported by the terminal device, S is reported through a first part of the first UCI.

In some embodiments, the first UCI further includes at least one non-zero coefficient, where the non-zero coefficient consists of amplitude and phase.

In some embodiments, the at least one non-zero coefficient is located in the second part of the first UCI.

In some embodiments, the at least one non-zero coefficient is located in at least one group in the second part of the first UCI.

In some embodiments, the at least one non-zero coefficient is mapped to the at least one group based on a preconfigured priority order.

In some embodiments, the communication unit described above may be a communication interface or a transceiver, or an input/output interface of a communication chip or a system on chip. The processing unit described above may be one or more processors.

It should be understood that the terminal device 300 in accordance with the embodiments of the present disclosure may correspond to the terminal device in the method embodiments of the present disclosure, and the above-mentioned and other operations and/or functions of various units in the terminal device 300 are respectively for implementing the corresponding processes of the terminal device in the method 200 illustrated in FIG. 3, which will not be repeated here for the sake of brevity.

FIG. 6 illustrates a schematic block diagram of a network device 400 in accordance with the embodiments of the present disclosure. As illustrated in FIG. 6, the network device 400 includes:

a communication unit 410, configured to receive first uplink control information (UCI);

where the first UCI includes: indexes of L spatial domain (SD) basis vectors, indexes of $M_v$ frequency domain (FD) basis vectors, and indexes of Q time domain (TD) basis vectors;

where the SD basis vector is a two-dimensional discrete Fourier transformation (DFT) vector with a length of $N_1N_2$, the FD basis vector is a DFT vector with a length of $N_3$, and the TD basis vector is a DFT vector with a length of $N_4$, where $N_1$, $N_2$, $N_3$, $N_4$, L, $M_v$ and Q are all positive integers.

In some embodiments, the indexes of the Q TD basis vectors are reported through $\left\lceil\log_2\binom{N-1}{Q-1}\right\rceil$ bits, where N is a positive integer.

In some embodiments, $N = N_4/2$; or $N = N_4$; or N = 2Q.

In some embodiments, N is predefined, or N is determined based on a high layer parameter.

In some embodiments, the indexes of the Q TD basis vectors are fixed.

In some embodiments, in a case of Q = 2, the indexes of the Q TD basis vectors are fixed to 0 and $N_4-1$.

In some embodiments, in a case of rank $v > 1$, an index of a TD basis vector of each layer of all layers indicated by the rank v is selected independently, or the index of the TD basis vector of each layer of all layers indicated by the rank v is the same.

In some embodiments, the first UCI includes a first bitmap;

> where the first bitmap is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, indexes of $S_2$ TD-FD basis vector pairs, or at least one non-zero coefficient;
> where the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and the non-zero coefficient consists of amplitude and phase, where S, $S_1$ and $S_2$ are all positive integers.

In some embodiments, a length of the first bitmap is $M_vQ+2LS$ bits, where a bitmap with a length of $M_vQ$ bits in the first bitmap is used to determine or indicate the indexes of the S TD-FD basis vector pairs, and a bitmap with a length of 2LS bits in the first bitmap is used to determine or indicate the at least one non-zero coefficient.

In some embodiments, $S = M_v$.

In some embodiments, a length of the first bitmap is $2LM_v+SQ$ bits, where a bitmap with a length of $2LM_v$ bits in the first bitmap is used to determine or indicate the indexes of the S SD-FD basis vector pairs, and a bitmap with a length of SQ bits in the first bitmap is used to determine or indicate the at least one non-zero coefficient.

In some embodiments, in a case of rank $v > 1$, a bitmap with $2vLM_v$ bits is used to determine or indicate indexes of SD-FD basis vector pairs of all layers indicated by the rank v, where each layer of all layers indicated by the rank v corresponds to the bitmap with the length of $2LM_v$ bits.

In some embodiments, in a case of rank $v > 1$, a bitmap with SQv bits is used to determine or indicate non-zero coefficients of all layers indicated by the rank v, where each layer of all layers indicated by the rank v corresponds to the bitmap with the length of SQ bits.

In some embodiments, $S = K_0$, where $K_0$ is the number of non-zero coefficients configured by a high layer.

In some embodiments, in a case of rank $v > 1$, the bitmap with SQ bits is used to determine or indicate non-zero coefficients of all layers indicated by the rank v, where $S = 2K_0$, or $S = 2K_0$ with the number of non-zero coefficients of each layer indicated by the rank v satisfying less than or equal to $K_0$, where $K_0$ is the number of non-zero coefficients configured by a high layer.

In some embodiments, a length of the first bitmap is $2LQ+SM_v$ bits, where a bitmap with a length of 2LQ bits in the first bitmap is used to determine or indicate the indexes of the S SD-TD basis vector pairs, and a bitmap with a length of $SM_v$ bits in the first bitmap is used to determine or indicate the at least one non-zero coefficient.

In some embodiments, in a case of rank $v > 1$, the bitmap with 2LQ bits is used to determine or indicate an index of an SD-TD basis vector pair of each layer indicated by the rank v, or a bitmap with 2LQv bits is used to determine or indicate indexes of SD-TD basis vector pairs of all layers indicated by the rank v; and/or
in a case of rank $v > 1$, the bitmap with $SM_v$ bits is used to determine or indicate a non-zero coefficient of each layer indicated by the rank v.

In some embodiments, in a case of rank $v > 1$, the bitmap with 2LQ bits is used to determine or indicate indexes of SD-TD basis vector pairs of all layers indicated by the rank v; and/or
in a case of rank $v > 1$, the bitmap with $SM_v$ bits is used to determine or indicate a non-zero coefficient of each layer indicated by the rank v.

In some embodiments, $S = 2L$, where 2L is the number of SD basis vectors configured by a high layer.

In some embodiments, a length of the first bitmap is $LQ+2SM_v$ bits, where a bitmap with a length of LQ bits in the first bitmap is used to determine or indicate the indexes of the S SD-TD basis vector pairs, and a bitmap with a length of $2SM_v$ bits in the first bitmap is used to determine or indicate the at least one non-zero coefficient.

In some embodiments, in a case of rank $v > 1$, the bitmap with LQ bits is used to determine or indicate an index of an SD-TD basis vector pair of each layer indicated by the rank v, or a bitmap with LQv bits is used to determine or indicate indexes of SD-TD basis vector pairs of all layers indicated by the rank v; and/or
in a case of rank $v > 1$, the bitmap with $2SM_v$ bits is used to determine or indicate a non-zero coefficient of each layer indicated by the rank v.

In some embodiments, in a case of rank $v > 1$, the bitmap with LQ bits is used to determine or indicate indexes of SD-TD basis vector pairs of all layers indicated by the rank v; and/or
in a case of rank $v > 1$, the bitmap with $2SM_v$ bits is used to determine or indicate a non-zero coefficient of each layer indicated by the rank v.

In some embodiments, $S = L$, where L is the number of SD basis vectors configured by a high layer.

In some embodiments, a length of the first bitmap is $S_1S_2+2LQ_1+M_vQ_2$ bits, where $Q_1Q_2 = Q$;
where a bitmap with a length of $2LQ_1$ bits in the first bitmap is used to determine or indicate the indexes of the $S_1$ SD-TD basis vector pairs, a bitmap with a length of $M_vQ_2$ bits in the first bitmap is used to determine or indicate the indexes of the $S_2$ TD-FD basis vector pairs, and a bitmap with a length of $S_1S_2$ bits in the first bitmap is used to determine or indicate the at least one non-zero coefficient.

In some embodiments, a length of the first bitmap is $2LM_vQ$ bits, and the first bitmap is used to determine or indicate the at least one non-zero coefficient corresponding to an index of a TD-FD-SD basis vector pair;

where the TD-FD-SD basis vector pair consists of one TD basis vector of the Q TD basis vectors, one FD basis vector of the $M_v$ FD basis vectors, and one SD basis vector of the L SD basis vectors.

In some embodiments, the first bitmap is located in a second part of the first UCI.

In some embodiments, the first bitmap is located in at least one group in the second part of the first UCI.

In some embodiments, the first bitmap is mapped to the at least one group based on a preconfigured priority order.

In some embodiments, the first UCI includes a first indicator;

> where the first indicator is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, or indexes of $S_2$ TD-FD basis vector pairs;
> where the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, and the SD-TD basis vector pair consists of one SD basis vector of the L SD basis vectors and one TD basis vector of the Q TD basis vectors, where S, $S_1$ and $S_2$ are all positive integers.

In some embodiments, a bit length of the first indicator is $\left\lceil \log_2 \binom{M_vQ}{S} \right\rceil$ bits, and the first indicator is used to determine or indicate the indexes of the S TD-FD basis vector pairs.

In some embodiments, a length of the first indicator is $\left\lceil \log_2 \binom{2LM_v}{S} \right\rceil$ bits, and the first indicator is used to determine or indicate the indexes of the S SD-FD basis vector pairs.

In some embodiments, $S = K_0$, where $K_0$ is the number of non-zero coefficients configured by a high layer.

In some embodiments, a length of the first in-

dicator is $\left\lceil \log_2 \binom{2LQ}{S} \right\rceil$ bits, and the first indicator is used to determine or indicate the indexes of the S SD-TD basis vector pairs.

In some embodiments, in a case of rank v > 1, the $\left\lceil \log_2 \binom{2LQ}{S} \right\rceil$ bits are used to determine or indicate an index of an SD-TD basis vector pair of each layer indicated by the rank v, or $\left\lceil v\log_2 \binom{2LQ}{S} \right\rceil$ bits are used to determine or indicate indexes of the SD-TD basis vector pairs of all layers indicated by the rank v, or the $\left\lceil \log_2 \binom{2LQ}{S} \right\rceil$ bits are used to determine or indicate the indexes of the SD-TD basis vector pairs of all layers indicated by the rank v.

In some embodiments, S = 2L, where 2L is the number of SD basis vectors configured by a high layer.

In some embodiments, a length of the first indicator is $\left\lceil \log_2 \binom{LQ}{S} \right\rceil$ bits, and the first indicator determines or indicates the indexes of the S SD-TD basis vector pairs.

In some embodiments, in a case of rank v > 1, the $\left\lceil \log_2 \binom{LQ}{S} \right\rceil$ bits are used to determine or indicate an index of an SD-TD basis vector pair of each layer indicated by the rank v, or $\left\lceil v\log_2 \binom{LQ}{S} \right\rceil$ bits are used to determine or indicate indexes of SD-TD basis vector pairs of all layers indicated by the rank v, or the $\left\lceil \log_2 \binom{LQ}{S} \right\rceil$ bits are used to determine or indicate the indexes of the SD-TD basis vector pairs of all layers indicated by the rank v.

In some embodiments, S = L, where L is the number of SD basis vectors configured by a high layer.

In some embodiments, the first indicator includes first sub-information and/or second sub-information;

where a length of the first sub-information is $\left\lceil \log_2 \binom{2LQ_1}{S_1} \right\rceil$ bits, and the first sub-information is used to determine or indicate the indexes of the $S_1$ SD-TD basis vector pairs; and a length of the second sub-information is $\left\lceil \log_2 \binom{M_vQ_2}{S_2} \right\rceil$ bits, and the second sub-information is used to determine or indicate the indexes of the $S_2$ TD-FD basis vector pairs, where $Q_1Q_2 = Q$.

In some embodiments, the first indicator is located in a second part of the first UCI.

In some embodiments, the first indicator is located in at least one group of the second part of the first UCI.

In some embodiments, the first indicator is mapped to the at least one group based on a preconfigured priority order.

In some embodiments, the first UCI includes a strongest coefficient indicator, where

a length of the strongest coefficient indicator is $\lceil \log_2(2L) \rceil$ bits, where an FD basis vector corresponding to a strongest coefficient is moved to FD0 by cyclic shift, and/or a TD basis vector corresponding to the strongest coefficient is moved to TD0 by cyclic shift; or

the length of the strongest coefficient indicator is $\lceil \log_2(2L) \rceil$ bits, where the FD basis vector corresponding to the strongest coefficient is moved to FD0 by cyclic shift, and the TD basis vector corresponding to the strongest coefficient is determined by $\lceil \log_2(Q) \rceil$ bits or $\lceil \log_2(2LQ) \rceil$ bits; or

the length of the strongest coefficient indicator is $\lceil \log_2(2L) \rceil + \lceil \log_2(Q) \rceil + \lceil \log_2(M_v) \rceil$ bits, where an SD basis vector corresponding to the strongest coefficient is determined by $\lceil \log_2(2L) \rceil$ bits, the FD basis vector corresponding to the strongest coefficient is determined by $\lceil \log_2(M_v) \rceil$ bits, and the TD basis vector corresponding to the strongest coefficient is determined by $\lceil \log_2(Q) \rceil$ bits or $\lceil \log_2(2LQM_v) \rceil$ bits; or

the length of the strongest coefficient indicator is $\lceil \log_2(2L) \rceil + \lceil \log_2(S) \rceil$ bits, where the SD basis vector corresponding to the strongest coefficient is determined by $\lceil \log_2(2L) \rceil$ bits, and a TD-FD basis vector pair corresponding to the strongest coefficient is determined by $\lceil \log_2(S) \rceil$ bits or $\lceil \log_2(2LS) \rceil$ bits, where S is a positive integer, and $S = M_v$; or

the length of the strongest coefficient indicator is $\lceil \log_2(S) \rceil$ bits, where an SD-TD basis vector pair corresponding to the strongest coefficient is determined by $\lceil \log_2(S) \rceil$ bits, and the FD basis vector corresponding to the strongest coefficient is moved to FD0 by cyclic shift, where S is a positive integer, and S = 2L; or

the length of the strongest coefficient indicator is $\lceil \log_2(S) \rceil$ bits, where an SD-FD basis vector pair corresponding to the strongest coefficient is determined by $\lceil \log_2(S) \rceil$ bits, and the TD basis vector corresponding to the strongest coefficient is moved to TD0 by cyclic shift, where S is a positive integer, and $S = K_0$, $K_0$ being the number of non-zero coefficients configured by a high layer; or

the length of the strongest coefficient indicator is $\lceil \log_2(S) \rceil + \lceil \log_2(Q) \rceil$ bits, where the SD-FD basis vector pair corresponding to the strongest coefficient is determined by $\lceil \log_2(S) \rceil$ bits, and the TD basis vector corresponding to the strongest coefficient is determined by $\lceil \log_2(Q) \rceil$ bits or $\lceil \log_2(SQ) \rceil$ bits, where S is a positive integer, and $S = K_0$, $K_0$ being the

number of the non-zero coefficients configured by the high layer;

where the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and the non-zero coefficient consists of amplitude and phase.

In some embodiments, the strongest coefficient indicator is located in a second part of the first UCI.

In some embodiments, S is reported by the terminal device, or S is determined based on a high layer parameter.

In some embodiments, in a case where S is reported by the terminal device, S is reported through a first part of the first UCI.

In some embodiments, the first UCI further includes at least one non-zero coefficient, where the non-zero coefficient consists of amplitude and phase.

In some embodiments, the at least one non-zero coefficient is located in the second part of the first UCI.

In some embodiments, the at least one non-zero coefficient is located in at least one group in the second part of the first UCI.

In some embodiments, the at least one non-zero coefficient is mapped to the at least one group based on a preconfigured priority order.

In some embodiments, the communication unit may be a communication interface or a transceiver, or an input/output interface of a communication chip or a system on chip.

It should be understood that the network device 400 in accordance with the embodiments of the present disclosure may correspond to the network device in the method embodiments of the present disclosure, and the above-mentioned and other operations and/or functions of various units in the network device 400 are respectively for implementing the corresponding processes of the network device in the method 200 illustrated in FIG. 3, which will not be repeated here for the sake of brevity.

FIG. 7 is a schematic structural diagram of a communication device 500 provided in the embodiments of the present disclosure. The communication device 500 illustrated in FIG. 7 includes a processor 510, which may call a computer program from a memory and run the computer program to implement the method in the embodiments of the present disclosure.

In some embodiments, as illustrated in FIG. 7, the communication device 500 may further include a memory 520. The processor 510 may call a computer program from the memory 520 and run the computer program to implement the method in the embodiments of the present disclosure.

Here, the memory 520 may be a separate device independent of the processor 510, or may be integrated into the processor 510.

In some embodiments, as illustrated in FIG. 7, the communication device 500 may further include a transceiver 530. The processor 510 may control the transceiver 530 to communicate with other devices, and specifically, may control the transceiver 530 to transmit information or data to other devices, or receive information or data transmitted by other devices.

The transceiver 530 may include a transmitter and a receiver. The transceiver 530 may further include an antenna, and the number of antennas may be one or more.

In some embodiments, the processor 510 may implement the function of a processing unit in a terminal device, or the processor 510 may implement the function of a processing unit in a network device, which will not be repeated here for the sake of brevity.

In some embodiments, the transceiver 530 may implement the function of a communication unit in a terminal device, which will not be repeated here for the sake of brevity.

In some embodiments, the transceiver 530 may implement the function of a communication unit in a network device, which will not be repeated here for the sake of brevity.

In some embodiments, the communication device 500 may specifically be a network device of the embodiments of the present disclosure, and the communication device 500 may implement the corresponding processes implemented by the network device in various methods of the embodiments of the present disclosure, which will not be repeated here for the sake of brevity.

In some embodiments, the communication device 500 may specifically be a terminal device of the embodiments of the present disclosure, and the communication device 500 may implement the corresponding processes implemented by the terminal device in various methods of the embodiments of the present disclosure, which will not be repeated here for the sake of brevity.

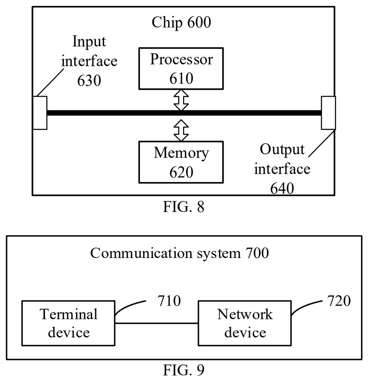

FIG. 8 is a schematic structural diagram of an apparatus in accordance with the embodiments of the present disclosure. The apparatus 600 illustrated in FIG. 8 includes a processor 610, and the processor 610 may call a computer program from a memory and run the computer program to implement the method in the embodiments of the present disclosure.

In some embodiments, as illustrated in FIG. 8, the apparatus 600 may further include a memory 620. The processor 610 may call a computer program from the memory 620 and run the computer program to implement the method in the embodiments of the present disclosure.

The memory 620 may be a separate device independent of the processor 610, or may be integrated into the processor 610.

In some embodiments, the apparatus 600 may further include an input interface 630. The processor 610 may control the input interface 630 to communicate with other devices or chips, and specifically, may control the input interface 630 to obtain information or data transmitted by other devices or chips. Optionally, the processor 610 may be located on a chip or off a chip.

In some embodiments, the processor 610 may implement the function of a processing unit in a terminal device, or the processor 610 may implement the function of a processing unit in a network device, which will not be repeated here for the sake of brevity.

In some embodiments, the input interface 630 may implement the function of a communication unit in a terminal device, or the input interface 630 may implement the function of a communication unit in a network device.

In some embodiments, the apparatus 600 may further include an output interface 640. The processor 610 may control the output interface 640 to communicate with other devices or chips, and specifically, may control the output interface 640 to output information or data to other devices or chips. Optionally, the processor 610 may be located on a chip or off a chip.

In some embodiments, the output interface 640 may implement the function of a communication unit in a terminal device, or the output interface 640 may implement the function of a communication unit in a network device.

In some embodiments, the apparatus may be applied to a network device in the embodiments of the present disclosure, and the apparatus may implement the corresponding processes implemented by the network device in the various methods of the embodiments of the present disclosure, which will not be repeated here for the sake of brevity.

In some embodiments, the apparatus may be applied to a terminal device in the embodiments of the present disclosure, and the apparatus may implement the corresponding processes implemented by the terminal device in the various methods in the embodiments of the present disclosure, which will not be repeated here for the sake of brevity.

In some embodiments, the apparatus mentioned in the embodiments of the present disclosure may also be a chip. For example, the apparatus may be a system level chip, a system chip, a chip system, a system-on-chip chip, or the like.

FIG. 9 is a schematic block diagram of a communication system 700 provided in the embodiments of the present disclosure. As illustrated in FIG. 9, the communication system 700 includes a terminal device 710 and a network device 720.

The terminal device 710 may be configured to implement the corresponding functions implemented by the terminal device in the above method, and the network device 720 may be configured to implement the corresponding functions implemented by the network device in the above method, which will not be repeated here for the sake of brevity.

It should be understood that the processor in the embodiments of the present disclosure may be an integrated circuit chip with a processing capability of signals. In the implementation process, various steps of the above method embodiments may be completed by an integrated logic circuit of hardware in the processor or an instruction in a software form. The above processor may be a general-purpose processor, a digital signal processor (DSP), an application specific integrated circuit (ASIC), a field programmable gate array (FPGA) or other programmable logic devices, a discrete gate or transistor logic device, or a discrete hardware component, which may implement or perform various methods, steps and logical block diagrams disclosed in the embodiments of the present disclosure. A general-purpose processor may be a microprocessor, or the processor may be any conventional processor. The steps of the method disclosed in combination with the embodiments of the present disclosure may be directly embodied as being performed and completed by a hardware decoding processor, or by using a combination of hardware and software modules in the decoding processor. The software module may be located in a random memory, a flash memory, a read-only memory, a programmable read-only memory or an electrically erasable programmable memory, a register, or other mature storage media in the art. The storage medium is located in the memory, and the processor reads the information in the memory and completes the steps of the above methods in combination with its hardware.

It may be understood that, the memory in the embodiments of the present disclosure may be a volatile (transitory) memory or a non-volatile (non-transitory) memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. As an example but not a limitation, a variety of forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the system and the method described herein is intended to include, but not limited to, these and any other suitable types of memories.

It should be understood that the above memory is exemplary but not limiting illustration, for example, the memory in the embodiments of the present disclosure may be a static random access memory (static RAM, SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), or the like. That is, the memory in the embodiments of the present disclosure is intended to include, but not limited to, these and any other suitable types of memories.

The embodiments of the present disclosure further provide a computer-readable storage medium for storing a computer program.

In some embodiments, the computer-readable storage medium may be applied to a network device in the embodiments of the present disclosure, and the computer program enables a computer to perform the corresponding processes implemented by the network device in the various methods of the embodiments of the present disclosure, which will not be repeated here for the sake of brevity.

In some embodiments, the computer-readable storage medium may be applied to a terminal device in the embodiments of the present disclosure, and the computer program enables a computer to perform the corresponding processes implemented by the terminal device in the various methods of the embodiments of the present disclosure, which will not be repeated here for the sake of brevity.

The embodiments of the present disclosure further provide a computer program product including computer program instructions.

In some embodiments, the computer program product may be applied to a network device in the embodiments of the present disclosure, and the computer program instructions enable a computer to perform the corresponding processes implemented by the network device in the various methods of the embodiments of the present disclosure, which will not be repeated here for the sake of brevity.

In some embodiments, the computer program product may be applied to a terminal device in the embodiments of the present disclosure, and the computer program instructions enable a computer to perform the corresponding processes implemented by the terminal device in the various methods of the embodiments of the present disclosure, which will not be repeated here for the sake of brevity.

The embodiments of the present disclosure further provide a computer program.

In some embodiments, the computer program may be applied to a network device in the embodiments of the present disclosure. The computer program, when run on a computer, enables the computer to perform the corresponding processes implemented by the network device in the various methods of the embodiments of the present disclosure, which will not be repeated here for the sake of brevity.

In some embodiments, the computer program may be applied to a terminal device in the embodiments of the present disclosure. The computer program, when run on a computer, enables the computer to perform the corresponding processes implemented by the terminal device in the various methods of the embodiments of the present disclosure, which will not be repeated here for the sake of brevity.

Those ordinary skilled in the art may be aware that, units and algorithm steps of the examples described in combination with the embodiments disclosed herein can be implemented by electronic hardware or by a combination of computer software and electronic hardware. Whether these functions are performed in hardware or software depends on the specific application and design constraints of the technical solutions. A skilled person may use different methods to implement the described functions for each specific application, but such implementation should not be considered beyond the scope of the present disclosure.

It may be clearly understood by those skilled in the art that, for convenience and brevity of the description, the specific working procedures of the system, the apparatus/device and the unit described above may refer to the corresponding procedures in the above method embodiments, which will not be repeated here.

In the several embodiments provided by the application, it should be understood that the disclosed systems, apparatus/device, and methods may be implemented in other ways. For example, the apparatus/device embodiments described above are only schematic. For example, division of the units is only division of logical functions, and there may be other division ways in an actual implementation, for example, a plurality of units or components may be combined or integrated into another system, or some features may be ignored or not performed. In addition, the mutual coupling or direct coupling or communicative connection between each other as illustrated or discussed may be indirect coupling or communicative connection of apparatus/device or units via some interfaces, which may be electrical, mechanical, or in other forms.

The units illustrated as separate components may be or may not be physically separated, and the components illustrated as units may be or may not be physical units, that is, they may be located in one place, or may be distributed onto a plurality of network units. Some or all of the units may be selected according to actual needs, to implement the purpose of the schemes of the embodiments.

In addition, various functional units in the various embodiments of the present disclosure may be integrated into one processing unit, or various units may exist physically separately, or two or more units may be integrated into one unit.

The functions, if implemented in the form of a software functional unit and sold or used as an independent product, may be stored in a computer-readable storage medium. Based on such an understanding, the technical solution of the present disclosure essentially, or a part of the technical solutions that contribute to the prior art, or a part of the technical solutions, may be embodied in the form of a software product, in which the computer software product is stored in a storage medium, and includes a plurality of instructions for enabling a computer device (which may be a personal computer, a server, a network device, or the like) to perform all or some of steps of the methods described in the various embodiments of the present disclosure. The aforementioned storage medium includes a USB flash drive (U disk), a mobile hard disk, a read-only memory (ROM), a random access memory (RAM), a diskette, an optical disk, or other mediums capable of storing program codes.

The foregoing descriptions are merely specific implementations of the present disclosure, but the protection scope of the present disclosure is not limited thereto. Any skilled person in the art could readily conceive of changes or replacements within the technical scope of the present application, which shall all be included in the protection scope of the present disclosure. Therefore, the protection scope of the present disclosure should be subject to the protection scope of the claims.

## Claims

1. A method of wireless communication, comprising:

   transmitting, by a terminal device, first uplink control information (UCI);
   wherein the first UCI comprises: indexes of L spatial domain (SD) basis vectors, indexes of $M_v$ frequency domain (FD) basis vectors, and indexes of Q time domain (TD) basis vectors,
   wherein an SD basis vector is a two-dimensional discrete Fourier transformation (DFT) vector with a length of $N_1 N_2$, an FD basis vector is a DFT vector with a length of N3, and a TD basis vector is a DFT vector with a length of N4,
   wherein $N_1$, $N_2$, $N_3$, $N_4$, L, $M_v$ and Q are all positive integers.

2. The method according to claim 1, wherein the indexes of the Q TD basis vectors are reported through $\left\lceil \log_2 \binom{N-1}{Q-1} \right\rceil$ bits, wherein N is a positive integer.

3. The method according to claim 2, wherein $N = N_4/2$; or $N = N_4$; or $N = 2Q$.

4. The method according to claim 2 or 3, wherein N is predefined, or N is determined based on a high layer parameter.

5. The method according to any one of claims 1 to 4, wherein the indexes of the Q TD basis vectors are fixed.

6. The method according to claim 5, wherein in a case of Q = 2, the indexes of the Q TD basis vectors are fixed to 0 and $N_4-1$.

7. The method according to any one of claims 1 to 6, wherein
in a case of rank $v > 1$, an index of a TD basis vector of each layer of all layers indicated by the rank $v$ is selected independently, or the index of the TD basis vector of each layer of all layers indicated by the rank $v$ is the same.

8. The method according to any one of claims 1 to 7, wherein

the first UCI comprises a first bitmap,
wherein the first bitmap is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, indexes of $S_2$ TD-FD basis vector pairs, or at least one non-zero coefficient,
wherein a TD-FD basis vector pair consists of one TD basis vector of the Q TD basis vectors and one FD basis vector of the $M_v$ FD basis vectors, an SD-FD basis vector pair consists of one SD basis vector of the L SD basis vectors and one FD basis vector of the $M_v$ FD basis vectors, an SD-TD basis vector pair consists of one SD basis vector of the L SD basis vectors and one TD basis vector of the Q TD basis vectors, and a non-zero coefficient consists of amplitude and phase, wherein S, $S_1$ and $S_2$ are all positive integers.

9. The method according to claim 8, wherein
a length of the first bitmap is $M_vQ+2LS$ bits, wherein a bitmap with a length of $M_vQ$ bits in the first bitmap is used to determine or indicate the indexes of the S TD-FD basis vector pairs, and a bitmap with a length of 2LS bits in the first bitmap is used to determine or indicate the at least one non-zero coefficient.

10. The method according to claim 9, wherein
$S = M_v$.

11. The method according to claim 8, wherein a length of the first bitmap is $2LM_v+SQ$ bits, wherein a bitmap with a length of $2LM_v$ bits in the first bitmap is used to determine or indicate the indexes of the S SD-FD basis vector pairs, and a bitmap with a length of SQ bits in the first bitmap is used to determine or indicate the at least one non-zero coefficient.

12. The method according to claim 11, wherein
in a case of rank $v > 1$, a bitmap with $2vLM_v$ bits is used to determine or indicate indexes of SD-FD basis vector pairs of all layers indicated by the rank $v$, wherein each layer of all layers indicated by the rank $v$ corresponds to the bitmap with the length of $2LM_v$ bits.

13. The method according to claim 11 or 12, wherein
in a case of rank $v > 1$, a bitmap with SQv bits is used to determine or indicate non-zero coefficients of all layers indicated by the rank $v$, wherein each layer of all layers indicated by the rank $v$ corresponds to the bitmap with the length of SQ bits.

14. The method according to any one of claims 11 to 13, wherein
$S = K_0$, wherein $K_0$ is a number of non-zero coefficients configured by a high layer.

15. The method according to claim 11 or 12, wherein
in a case of rank $v > 1$, the bitmap with SQ bits is used to determine or indicate non-zero coefficients of all layers indicated by the rank $v$, wherein $S = 2K_0$, or $S = 2K_0$ with a number of non-zero coefficients of each layer indicated by the rank $v$ satisfying less than or equal to $K_0$, wherein $K_0$ is a number of non-zero coefficients configured by a high layer.

16. The method according to claim 8, wherein
a length of the first bitmap is $2LQ+SM_v$ bits, wherein a bitmap with a length of 2LQ bits in the first bitmap is used to determine or indicate the indexes of the S SD-TD basis vector pairs, and a bitmap with a length of $SM_v$ bits in the first bitmap is used to determine or indicate the at least one non-zero coefficient.

17. The method according to claim 16, wherein

in a case of rank $v > 1$, the bitmap with 2LQ bits is used to determine or indicate an index of an SD-TD basis vector pair of each layer indicated by the rank $v$, or a bitmap with 2LQv bits is used to determine or indicate indexes of SD-TD basis vector pairs of all layers indicated by the rank $v$; and/or
in the case of the rank $v > 1$, the bitmap with $SM_v$ bits is used to determine or indicate a non-zero coefficient of each layer indicated by the rank $v$.

18. The method according to claim 16, wherein

in a case of rank $v > 1$, the bitmap with 2LQ bits is used to determine or indicate indexes of SD-TD basis vector pairs of all layers indicated by the rank $v$; and/or
in the case of the rank $v > 1$, the bitmap with $SM_v$ bits is used to determine or indicate a non-zero coefficient of each layer indicated by the rank $v$.

19. The method according to any one of claims 16 to 18, wherein
$S = 2L$, wherein 2L is a number of SD basis vectors configured by a high layer.

20. The method according to claim 8, wherein

a length of the first bitmap is $LQ+2SM_v$ bits, wherein a bitmap with a length of LQ bits in the first bitmap is used to determine or indicate the indexes of the S SD-TD basis vector pairs, and a bitmap with a length of $2SM_v$ bits in the first bitmap is used to determine or indicate the at least one non-zero coefficient.

21. The method according to claim 20, wherein

in a case of rank v > 1, the bitmap with LQ bits is used to determine or indicate an index of an SD-TD basis vector pair of each layer indicated by the rank v, or a bitmap with LQv bits is used to determine or indicate indexes of SD-TD basis vector pairs of all layers indicated by the rank v; and/or
in the case of the rank v > 1, the bitmap with $2SM_v$ bits is used to determine or indicate a non-zero coefficient of each layer indicated by the rank v.

22. The method according to claim 20, wherein

in a case of rank v > 1, the bitmap with LQ bits is used to determine or indicate indexes of SD-TD basis vector pairs of all layers indicated by the rank v; and/or
in the case of the rank v > 1, the bitmap with $2SM_v$ bits is used to determine or indicate a non-zero coefficient of each layer indicated by the rank v.

23. The method according to any one of claims 20 to 22, wherein
S = L, wherein L is a number of SD basis vectors configured by a high layer.

24. The method according to claim 8, wherein

a length of the first bitmap is $S_1S_2+2LQ_1+M_vQ_2$ bits, wherein $Q_1Q_2 = Q$;
wherein a bitmap with a length of $2LQ_1$ bits in the first bitmap is used to determine or indicate the indexes of the $S_1$ SD-TD basis vector pairs, a bitmap with a length of $M_vQ_2$ bits in the first bitmap is used to determine or indicate the indexes of the $S_2$ TD-FD basis vector pairs, and a bitmap with a length of $S_1S_2$ bits in the first bitmap is used to determine or indicate the at least one non-zero coefficient.

25. The method according to claim 8, wherein

a length of the first bitmap is $2LM_vQ$ bits, and the first bitmap is used to determine or indicate the at least one non-zero coefficient corresponding to an index of a TD-FD-SD basis vector pair, wherein the TD-FD-SD basis vector pair consists of one TD basis vector of the Q TD basis vectors, one FD basis vector of the $M_v$ FD basis vectors, and one SD basis vector of the L SD basis vectors.

26. The method according to any one of claims 8 to 25, wherein
the first bitmap is located in a second part of the first UCI.

27. The method according to claim 26, wherein
the first bitmap is located in at least one group in the second part of the first UCI.

28. The method according to claim 27, wherein
the first bitmap is mapped to the at least one group based on a preconfigured priority order.

29. The method according to any one of claims 1 to 7, wherein

the first UCI comprises a first indicator;
wherein the first indicator is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, or indexes of $S_2$ TD-FD basis vector pairs;
wherein a TD-FD basis vector pair consists of one TD basis vector of the Q TD basis vectors and one FD basis vector of the $M_v$ FD basis vectors, an SD-FD basis vector pair consists of one SD basis vector of the L SD basis vectors and one FD basis vector of the $M_v$ FD basis vectors, and an SD-TD basis vector pair consists of one SD basis vector of the L SD basis vectors and one TD basis vector of the Q TD basis vectors, wherein S, $S_1$ and $S_2$ are all positive integers.

30. The method according to claim 29, wherein

a bit length of the first indicator is $\left\lceil \log_2 \binom{M_vQ}{S} \right\rceil$ bits, and the first indicator is used to determine or indicate the indexes of the S TD-FD basis vector pairs.

31. The method according to claim 30, wherein
$S = M_v$.

32. The method according to claim 29, wherein

a length of the first indicator is $\left\lceil \log_2 \binom{2LM_v}{S} \right\rceil$ bits, and the first indicator is used to determine or indicate the indexes of the S SD-FD basis vector pairs.

33. The method according to claim 32, wherein
$S = K_0$, wherein $K_0$ is a number of non-zero coefficients configured by a high layer.

34. The method according to claim 29, wherein
a length of the first indicator is $\left\lceil \log_2 \binom{2LQ}{S} \right\rceil$ bits, and the first indicator is used to determine or indicate the indexes of the S SD-TD basis vector pairs.

35. The method according to claim 34, wherein
in a case of rank v > 1, the $\left\lceil \log_2 \binom{2LQ}{S} \right\rceil$ bits are used to determine or indicate an index of an SD-TD basis vector pair of each layer indicated by the rank v, or $\left\lceil v\log_2 \binom{2LQ}{S} \right\rceil$ bits are used to determine or indicate indexes of SD-TD basis vector pairs of all layers indicated by the rank v, or the $\left\lceil \log_2 \binom{2LQ}{S} \right\rceil$ bits are used to determine or indicate the indexes of the SD-TD basis vector pairs of all layers indicated by the rank v.

36. The method according to claim 34 or 35, wherein
S = 2L, wherein 2L is a number of SD basis vectors configured by a high layer.

37. The method according to claim 29, wherein
a length of the first indicator is $\left\lceil \log_2 \binom{LQ}{S} \right\rceil$ bits, and the first indicator determines or indicates the indexes of the S SD-TD basis vector pairs.

38. The method according to claim 37, wherein
in a case of rank v > 1, the $\left\lceil \log_2 \binom{LQ}{S} \right\rceil$ bits are used to determine or indicate an index of an SD-TD basis vector pair of each layer indicated by the rank v, or $\left\lceil v\log_2 \binom{LQ}{S} \right\rceil$ bits are used to determine or indicate indexes of SD-TD basis vector pairs of all layers indicated by the rank v, or the $\left\lceil \log_2 \binom{LQ}{S} \right\rceil$ bits are used to determine or indicate the indexes of the SD-TD basis vector pairs of all layers indicated by the rank v.

39. The method according to claim 38, wherein
S = L, wherein L is a number of SD basis vectors configured by a high layer.

40. The method according to claim 29, wherein

the first indicator comprises first sub-information and/or second sub-information;
wherein a length of the first sub-information is $\left\lceil \log_2 \binom{2LQ_1}{S_1} \right\rceil$ bits, the first sub-information is used to determine or indicate the indexes of the S₁ SD-TD basis vector pairs, a length of the second sub-information is $\left\lceil \log_2 \binom{M_vQ_2}{S_2} \right\rceil$ bits, and the second sub-information is used to determine or indicate the indexes of the S₂ TD-FD basis vector pairs, $Q_1Q_2 = Q$.

41. The method according to any one of claims 29 to 40, wherein
the first indicator is located in a second part of the first UCI.

42. The method according to claim 41, wherein
the first indicator is located in at least one group in the second part of the first UCI.

43. The method according to claim 42, wherein
the first indicator is mapped to the at least one group based on a preconfigured priority order.

44. The method according to any one of claims 1 to 43, wherein

the first UCI comprises a strongest coefficient indicator, wherein
a length of the strongest coefficient indicator is $\lceil \log_2(2L) \rceil$ bits, wherein an FD basis vector corresponding to a strongest coefficient is moved to FD0 by cyclic shift, and/or a TD basis vector corresponding to the strongest coefficient is moved to TD0 by cyclic shift; or
the length of the strongest coefficient indicator is $\lceil \log_2(2L) \rceil$ bits, wherein the FD basis vector corresponding to the strongest coefficient is moved to FD0 by cyclic shift, and the TD basis vector corresponding to the strongest coefficient is determined by $\lceil \log_2(Q) \rceil$ bits or $\lceil \log_2(2LQ) \rceil$ bits; or
the length of the strongest coefficient indicator is $\lceil \log_2(2L) \rceil + \lceil \log_2(Q) \rceil + \lceil \log_2(M_v) \rceil$ bits, wherein an SD basis vector corresponding to the strongest coefficient is determined by $\lceil \log_2(2L) \rceil$ bits, the FD basis vector corresponding to the strongest coefficient is determined by $\lceil \log_2(M_v) \rceil$ bits, and the TD basis vector corresponding to the strongest coefficient is determined by $\lceil \log_2(Q) \rceil$ bits or $\lceil \log_2(2LQM_v) \rceil$ bits; or
the length of the strongest coefficient indicator is $\lceil \log_2(2L) \rceil + \lceil \log_2(S) \rceil$ bits, wherein the SD basis vector corresponding to the strongest coefficient is determined by $\lceil \log_2(2L) \rceil$ bits, and a TD-FD basis vector pair corresponding to the strongest coefficient is determined by

$\lceil \log_2(S) \rceil$ bits or $\lceil \log_2(2LS) \rceil$ bits, wherein S is a positive integer, and S = $M_v$; or

the length of the strongest coefficient indicator is $\lceil \log_2(S) \rceil$ bits, wherein an SD-TD basis vector pair corresponding to the strongest coefficient is determined by $\lceil \log_2(S) \rceil$ bits, and the FD basis vector corresponding to the strongest coefficient is moved to FD0 by cyclic shift, wherein S is a positive integer, and S = 2L; or

the length of the strongest coefficient indicator is $\lceil \log_2(S) \rceil$ bits, wherein an SD-FD basis vector pair corresponding to the strongest coefficient is determined by $\lceil \log_2(S) \rceil$ bits, and the TD basis vector corresponding to the strongest coefficient is moved to TD0 by cyclic shift, wherein S is a positive integer, S = $K_0$, $K_0$ being a number of non-zero coefficients configured by a high layer; or

the length of the strongest coefficient indicator is $\lceil \log_2(S) \rceil + \lceil \log_2(Q) \rceil$ bits, wherein the SD-FD basis vector pair corresponding to the strongest coefficient is determined by $\lceil \log_2(S) \rceil$ bits, and the TD basis vector corresponding to the strongest coefficient is determined by $\lceil \log_2(Q) \rceil$ bits or $\lceil \log_2(SQ) \rceil$ bits, wherein S is a positive integer, S = $K_0$, $K_0$ being the number of the non-zero coefficients configured by the high layer;

wherein the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and a non-zero coefficient consists of amplitude and phase.

45. The method according to claim 44, wherein the strongest coefficient indicator is located in a second part of the first UCI.

46. The method according to any one of claims 1 to 23, 29 to 39, 44 and 45, wherein S is reported by the terminal device, or S is determined based on a high layer parameter.

47. The method according to claim 46, wherein in a case where S is reported by the terminal device, S is reported through a first part of the first UCI.

48. The method according to any one of claims 1 to 47, wherein

the first UCI further comprises at least one non-zero coefficient, wherein a non-zero coefficient consists of amplitude and phase.

49. The method according to claim 48, wherein the at least one non-zero coefficient is located in a second part of the first UCI.

50. The method according to claim 49, wherein the at least one non-zero coefficient is located in at least one group in the second part of the first UCI.

51. A method of wireless communication, comprising:

receiving, by a network device, first uplink control information (UCI),

wherein the first UCI comprises: indexes of L spatial domain (SD) basis vectors, indexes of $M_v$ frequency domain (FD) basis vectors, and indexes of Q time domain (TD) basis vectors,

wherein an SD basis vector is a two-dimensional discrete Fourier transformation (DFT) vector with a length of $N_1N_2$, an FD basis vector is a DFT vector with a length of N3, and a TD basis vector is a DFT vector with a length of N4, where $N_1$, $N_2$, $N_3$, $N_4$, L, $M_v$ and Q are all positive integers.

52. The method according to claim 51, wherein the indexes of the Q TD basis vectors are reported through $\left\lceil \log_2 \binom{N-1}{Q-1} \right\rceil$ bits, wherein N is a positive integer.

53. The method according to claim 52, wherein N = N4/2; or N = N4; or N = 2Q.

54. The method according to claim 52 or 53, wherein N is predefined, or N is determined based on a high layer parameter.

55. The method according to any one of claims 51 to 54, wherein the indexes of the Q TD basis vectors are fixed.

56. The method according to claim 55, wherein in a case of Q = 2, the indexes of the Q TD basis vectors are fixed to 0 and N4-1.

57. The method according to any one of claims 51 to 56, wherein in a case of rank v > 1, an index of a TD basis vector of each layer of all layers indicated by the rank v is selected independently, or the index of the TD basis vector of each layer of all layers indicated by the rank v is the same.

**58.** The method according to any one of claims 51 to 57, wherein

the first UCI comprises a first bitmap, wherein the first bitmap is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, indexes of $S_2$ TD-FD basis vector pairs, or at least one non-zero coefficient, wherein a TD-FD basis vector pair consists of one TD basis vector of the Q TD basis vectors and one FD basis vector of the $M_v$ FD vectors, an SD-FD basis vector pair consists of one SD basis vector of the L SD basis vectors and one FD basis vector of the $M_v$ FD vectors, an SD-TD basis vector pair consists of one SD basis vector of the L SD basis vectors and one TD basis vector of the Q TD basis vectors, and a non-zero coefficient consists of amplitude and phase, wherein S, $S_1$ and $S_2$ are all positive integers.

**59.** The method according to claim 58, wherein a length of the first bitmap is $M_vQ+2LS$ bits, wherein a bitmap with a length of $M_vQ$ bits in the first bitmap is used to determine or indicate the indexes of the S TD-FD basis vector pairs, and a bitmap with a length of 2LS bits in the first bitmap is used to determine or indicate the at least one non-zero coefficient.

**60.** The method of claim 59, wherein $S = M_v$.

**61.** The method according to claim 58, wherein a length of the first bitmap is $2LM_v+SQ$ bits, wherein a bitmap with a length of $2LM_v$ bits in the first bitmap is used to determine or indicate the indexes of the S SD-FD basis vector pairs, and a bitmap with a length of SQ bits in the first bitmap is used to determine or indicate the at least one non-zero coefficient.

**62.** The method according to claim 61, wherein in a case of rank v > 1, a bitmap with $2vLM_v$ bits is used to determine or indicate indexes of SD-FD basis vector pairs of all layers indicated by the rank v, wherein each layer of all layers indicated by the rank v corresponds to the bitmap with the length of $2LM_v$ bits.

**63.** The method according to claim 61 or 62, wherein in a case of rank v > 1, a bitmap with SQv bits is used to determine or indicate non-zero coefficients of all layers indicated by the rank v, wherein each layer of all layers indicated by the rank v corresponds to the bitmap with the length of SQ bits.

**64.** The method according to any one of claims 61 to 63, wherein $S = K_0$, wherein $K_0$ is a number of non-zero coefficients configured by a high layer.

**65.** The method according to claim 61 or 62, wherein in a case of rank v > 1, the bitmap with SQ bits is used to determine or indicate non-zero coefficients of all layers indicated by the rank v, wherein $S = 2K_0$, or $S = 2K_0$ with a number of non-zero coefficients of each layer indicated by the rank v satisfying less than or equal to $K_0$, wherein $K_0$ is a number of non-zero coefficients configured by a high layer.

**66.** The method according to claim 58, wherein a length of the first bitmap is $2LQ+SM_v$ bits, wherein a bitmap with a length of 2LQ bits in the first bitmap is used to determine or indicate the indexes of the S SD-TD basis vector pairs, and a bitmap with a length of $SM_v$ bits in the first bitmap is used to determine or indicate the at least one non-zero coefficient.

**67.** The method according to claim 66, wherein

in a case of rank v > 1, the bitmap with 2LQ bits is used to determine or indicate an index of an SD-TD basis vector pair of each layer indicated by the rank v, or a bitmap with 2LQv bits is used to determine or indicate indexes of SD-TD basis vector pairs of all layers indicated by the rank v; and/or in the case of the rank v > 1, the bitmap with $SM_v$ bits is used to determine or indicate a non-zero coefficient of each layer indicated by the rank v.

**68.** The method according to claim 66, wherein

in a case of rank v > 1, the bitmap with 2LQ bits is used to determine or indicate indexes of SD-TD basis vector pairs of all layers indicated by the rank v; and/or in the case of the rank v > 1, the bitmap with $SM_v$ bits is used to determine or indicate a non-zero coefficient of each layer indicated by the rank v.

**69.** The method according to any one of claims 66 to 68, wherein $S = 2L$, wherein 2L is a number of SD basis vectors configured by a high layer.

**70.** The method according to claim 58, wherein a length of the first bitmap is $LQ+2SM_v$ bits, wherein a bitmap with a length of LQ bits in the first bitmap is used to determine or indicate the indexes of the S SD-TD basis vector pairs, and a bitmap with a length of $2SM_v$ bits in the first bitmap is used to determine or indicate the at least one non-zero coefficient.

**71.** The method according to claim 70, wherein

in a case of the rank v > 1, the bitmap with LQ bits is used to determine or indicate an index of an SD-TD basis vector pair of each layer indicated by the rank v, or a bitmap with LQv bits is used to determine or indicate indexes of SD-TD basis vector pairs of all layers indicated by the rank v; and/or
in the case of rank v > 1, the bitmap with $2SM_v$ bits is used to determine or indicate a non-zero coefficient of each layer indicated by the rank v.

**72.** The method according to claim 70, wherein

in a case of the rank v > 1, the bitmap with LQ bits is used to determine or indicate indexes of SD-TD basis vector pairs of all layers indicated by the rank v; and/or
in the case of rank v > 1, the bitmap with $2SM_v$ bits is used to determine or indicate a non-zero coefficient of each layer indicated by the rank v.

**73.** The method according to any one of claims 70 to 72, wherein
S = L, wherein L is a number of SD basis vectors configured by a high layer.

**74.** The method according to claim 58, wherein

a length of the first bitmap is $S_1S_2+2LQ_1+M_vQ_2$ bits, wherein $Q_1Q_2 = Q$;
wherein a bitmap with a length of $2LQ_1$ bits in the first bitmap is used to determine or indicate the indexes of the $S_1$ SD-TD basis vector pairs, a bitmap with a length of $M_vQ_2$ bits in the first bitmap is used to determine or indicate the indexes of the $S_2$ TD-FD basis vector pairs, and a bitmap with a length of $S_1S_2$ bits in the first bitmap is used to determine or indicate the at least one non-zero coefficient.

**75.** The method according to claim 58, wherein

a length of the first bitmap is $2LM_vQ$ bits, and the first bitmap is used to determine or indicate the at least one non-zero coefficient corresponding to an index of a TD-FD-SD basis vector pair, wherein the TD-FD-SD basis vector pair consists of one TD basis vector of the Q TD basis vectors, one FD basis vector of the $M_v$ FD basis vectors, and one SD basis vector of the L SD basis vectors.

**76.** The method according to any one of claims 58 to 75, wherein
the first bitmap is located in a second part of the first UCI.

**77.** The method according to claim 76, wherein
the first bitmap is located in at least one group in the second part of the first UCI.

**78.** The method according to claim 77, wherein
the first bitmap is mapped to the at least one group based on a preconfigured priority order.

**79.** The method according to any one of claims 51 to 57, wherein

the first UCI comprises a first indicator;
wherein the first indicator is used to determine or indicate at least one of: indexes of S SD-TD basis vector pairs, indexes of S TD-FD basis vector pairs, indexes of S SD-FD basis vector pairs, indexes of $S_1$ SD-TD basis vector pairs, or indexes of $S_2$ TD-FD basis vector pairs;
wherein a TD-FD basis vector pair consists of one TD basis vector of the Q TD basis vectors and one FD basis vector of the $M_v$ FD basis vectors, an SD-FD basis vector pair consists of one SD basis vector of the L SD basis vectors and one FD basis vector of the $M_v$ FD basis vectors, and an SD-TD basis vector pair consists of one SD basis vector of the L SD basis vectors and one TD basis vector of the Q TD basis vectors, wherein S, $S_1$ and $S_2$ are all positive integers.

**80.** The method according to claim 79, wherein
a bit length of the first indicator is $\left\lceil \log_2 \binom{M_vQ}{S} \right\rceil$ bits, and the first indicator is used to determine or indicate the indexes of the S TD-FD basis vector pairs.

**81.** The method of claim 80, wherein
S = $M_v$.

**82.** The method according to claim 79, wherein
a length of the first indicator is $\left\lceil \log_2 \binom{2LM_v}{S} \right\rceil$ bits, and the first indicator is used to determine or indicate the indexes of the S SD-FD basis vector pairs.

**83.** The method according to claim 82, wherein
S = $K_0$, wherein $K_0$ is a number of non-zero coefficients configured by a high layer.

**84.** The method according to claim 79, wherein
a length of the first indicator is $\left\lceil \log_2 \binom{2LQ}{S} \right\rceil$ bits, and the first indicator is used to determine or indicate the indexes of the S SD-TD basis vector pairs.

**85.** The method according to claim 84, wherein

in a case of rank v > 1, the $\left\lceil \log_2 \binom{2LQ}{S} \right\rceil$ bits are used to determine or indicate an index of an SD-TD basis vector pair of each layer indicated by the rank v, or $\left\lceil v\log_2 \binom{2LQ}{S} \right\rceil$ bits are used to determine or indicate indexes of SD-TD basis vector pairs of all layers indicated by the rank v, or the $\left\lceil \log_2 \binom{2LQ}{S} \right\rceil$ bits are used to determine or indicate the indexes of the SD-TD basis vector pairs of all layers indicated by the rank v.

86. The method according to claim 84 or 85, wherein S = 2L, wherein 2L is a number of SD basis vectors configured by a high layer.

87. The method according to claim 79, wherein a length of the first indicator is $\left\lceil \log_2 \binom{LQ}{S} \right\rceil$ bits, and the first indicator determines or indicates the indexes of the S SD-TD basis vector pairs.

88. The method according to claim 87, wherein in a case of rank v > 1, the $\left\lceil \log_2 \binom{LQ}{S} \right\rceil$ bits are used to determine or indicate an index of an SD-TD basis vector pair of each layer indicated by the rank v, or $\left\lceil v\log_2 \binom{LQ}{S} \right\rceil$ bits are used to determine or indicate indexes of SD-TD basis vector pairs of all layers indicated by the rank v, or the $\left\lceil \log_2 \binom{LQ}{S} \right\rceil$ bits are used to determine or indicate the indexes of the SD-TD basis vector pairs of all layers indicated by the rank v.

89. The method according to claim 88, wherein S = L, wherein L is a number of SD basis vectors configured by a high layer.

90. The method according to claim 79, wherein

the first indicator comprises first sub-information and/or second sub-information;
wherein a length of the first sub-information is $\left\lceil \log_2 \binom{2LQ_1}{S_1} \right\rceil$ bits, the first sub-information is used to determine or indicate the indexes of the $S_1$ SD-TD basis vector pairs, a length of the second sub-information is $\left\lceil \log_2 \binom{M_vQ_2}{S_2} \right\rceil$ bits, and the second sub-information is used to determine or indicate the indexes of the $S_2$ TD-FD basis vector pairs, $Q_1Q_2 = Q$.

91. The method according to any one of claims 79 to 90, wherein
the first indicator is located in a second part of the first UCI.

92. The method according to claim 91, wherein
the first indicator is located in at least one group in the second part of the first UCI.

93. The method according to claim 92, wherein
the first indicator is mapped to the at least one group based on a preconfigured priority order.

94. The method according to any one of claims 51 to 93, wherein

the first UCI comprises a strongest coefficient indicator, wherein
a length of the strongest coefficient indicator is $\lceil \log_2(2L) \rceil$ bits, wherein an FD basis vector corresponding to a strongest coefficient is moved to FD0 by cyclic shift, and/or a TD basis vector corresponding to the strongest coefficient is moved to TD0 by cyclic shift; or
the length of the strongest coefficient indicator is $\lceil \log_2(2L) \rceil$ bits, wherein the FD basis vector corresponding to the strongest coefficient is moved to FD0 by cyclic shift, and the TD basis vector corresponding to the strongest coefficient is determined by $\lceil \log_2(Q) \rceil$ bits or $\lceil \log_2(2LQ) \rceil$ bits; or
the length of the strongest coefficient indicator is $\lceil \log_2(2L) \rceil + \lceil \log_2(Q) \rceil + \lceil \log_2(M_v) \rceil$ bits, wherein an SD basis vector corresponding to the strongest coefficient is determined by $\lceil \log_2(2L) \rceil$ bits, the FD basis vector corresponding to the strongest coefficient is determined by $\lceil \log_2(M_v) \rceil$ bits, and the TD basis vector corresponding to the strongest coefficient is determined by $\lceil \log_2(Q) \rceil$ bits or $\lceil \log_2(2LQM_v) \rceil$ bits; or
the length of the strongest coefficient indicator is $\lceil \log_2(2L) \rceil + \lceil \log_2(S) \rceil$ bits, wherein the SD basis vector corresponding to the strongest coefficient is determined by $\lceil \log_2(2L) \rceil$ bits, and a TD-FD basis vector pair corresponding to the strongest coefficient is determined by $\lceil \log_2(S) \rceil$ bits or $\lceil \log_2(2LS) \rceil$ bits, wherein S is a positive integer, and S = $M_v$; or
the length of the strongest coefficient indicator is $\lceil \log_2(S) \rceil$ bits, wherein an SD-TD basis vector pair corresponding to the strongest coefficient is determined by $\lceil \log_2(S) \rceil$ bits, and the FD basis vector corresponding to the strongest coefficient is moved to FD0 by cyclic shift, wherein S is a positive integer, and S = 2L; or

the length of the strongest coefficient indicator is $\lceil \log_2(S) \rceil$ bits, wherein an SD-FD basis vector pair corresponding to the strongest coefficient is determined by $\lceil \log_2(S) \rceil$ bits, and the TD basis vector corresponding to the strongest coefficient is moved to TD0 by cyclic shift, wherein S is a positive integer, and S= $K_0$, $K_0$ being a number of non-zero coefficients configured by a high layer; or

the length of the strongest coefficient indicator is $\lceil \log_2(S) \rceil + \lceil \log_2(Q) \rceil$ bits, wherein the SD-FD basis vector pair corresponding to the strongest coefficient is determined by $\lceil \log_2(S) \rceil$ bits, the TD basis vector corresponding to the strongest coefficient is determined by $\lceil \log_2(Q) \rceil$ bits or $\lceil \log_2(SQ) \rceil$ bits, wherein S is a positive integer, and S = $K_0$, $K_0$ being the number of the non-zero coefficients configured by the high layer;

wherein the TD-FD basis vector pair consists of one TD basis vector of the Q TD basis vectors and one FD basis vector of the $M_v$ FD basis vectors, the SD-FD basis vector pair consists of one SD basis vector of the L SD basis vectors and one FD basis vector of the $M_v$ FD basis vectors, the SD-TD basis vector pair consists of one SD basis vector of the L SD basis vectors and one TD basis vector of the Q TD basis vectors, and a non-zero coefficient consists of amplitude and phase.

95. The method according to claim 94, wherein the strongest coefficient indicator is located in a second part of the first UCI.

96. The method according to any one of claims 51 to 73, 79 to 89, and 94 to 95, wherein
S is reported by a terminal device, or S is determined based on a high layer parameter.

97. The method according to claim 96, wherein
in a case where S is reported by the terminal device, S is reported through a first part of the first UCI.

98. The method according to any one of claims 51 to 97, wherein
the first UCI further comprises at least one non-zero coefficient, wherein a non-zero coefficient consists of amplitude and phase.

99. The method according to claim 98, wherein
the at least one non-zero coefficient is located in a second part of the first UCI.

100.

The method according to claim 99, wherein
the at least one non-zero coefficient is located in at least one group in the second part of the first UCI.

101.
A terminal device, comprising:

a communication unit, configured to transmit first uplink control information (UCI),
wherein the first UCI comprises: indexes of L spatial domain (SD) basis vectors, indexes of $M_v$ frequency domain (FD) basis vectors, and indexes of Q time domain (TD) basis vectors;
wherein an SD basis vector is a two-dimensional discrete Fourier transformation (DFT) vector with a length of $N_1N_2$, an FD basis vector is a DFT vector with a length of $N_3$, and a TD basis vector is a DFT vector with a length of N4, wherein $N_1$, $N_2$, $N_3$, $N_4$, L, $M_v$ and Q are all positive integers.

102.
A network device, comprising:

a communication unit, configured to receive first uplink control information (UCI);
wherein the first UCI comprises: indexes of L spatial domain (SD) basis vectors, indexes of $M_v$ frequency domain (FD) basis vectors, and indexes of Q time domain (TD) basis vectors;
wherein an SD basis vector is a two-dimensional discrete Fourier transformation (DFT) vector with a length of $N_1N_2$, an FD basis vector is a DFT vector with a length of $N_3$, and a TD basis vector is a DFT vector with a length of N4, wherein $N_1$, $N_2$, $N_3$, $N_4$, L, $M_v$ and Q are all positive integers.

103.
A terminal device, comprising a processor and a memory, wherein the memory is configured to store a computer program, and the processor is configured to call the computer program stored in the memory and run the computer program, so as to enable the terminal device to perform the method according to any one of claims 1 to 50.

104.
A network device, comprising a processor and a memory, wherein the memory is configured to store a computer program, and the processor is configured to call the computer program stored in the memory and run the computer program, so as to enable the network device to perform the method according to any one of claims 51 to 100.

105.
A chip, comprising a processor configured to call a computer program from a memory and run the computer program, so as to enable a device equipped with the chip to perform the method according to any one of claims 1 to 50.

**106.**
A chip, comprising a processor configured to call a computer program from a memory and run the computer program, so as to enable a device equipped with the chip to perform the method according to any one of claims 51 to 100.

**107.**
A computer-readable storage medium, configured to store a computer program, wherein the computer program, when being executed, implements the method according to any one of claims 1 to 50.

**108.**
A computer-readable storage medium, configured to store a computer program, wherein the computer program, when being executed, implements the method according to any one of claims 51 to 100.

**109.**
A computer program product, comprising computer program instructions, wherein the computer program instructions, when being executed, implement the method according to any one of claims 1 to 50.

**110.**
A computer program product, comprising computer program instructions, wherein the computer program instructions, when being executed, implement the method according to any one of claims 51 to 100.

**111.** A computer program, wherein the computer program, when being executed, implements the method according to any one of claims 1 to 50.

**112.**
A computer program, wherein the computer program, when being executed, implements the method according to any one of claims 51 to 100.

**100**

110

120          120

FIG. 1

Latency ← Beamforming PMIx →

Network
device

PMI x

UE          CSI-RS
Hx                    Hy

FIG. 2

**200**

| Terminal device | | Network device |

S210, transmitting, by a terminal device, first UCI,
where the first UCI includes: indexes of L SD basis vectors, indexes
of $M_v$ FD basis vectors, and indexes of Q TD basis vectors;
where the SD basis vector is a two-dimensional DFT vector with a
length of $N_1 N_2$, the FD basis vector is a DFT vector with a length of
$N_3$, and the TD basis vector is a DFT vector with a length of $N_4$,
where $N_1$, $N_2$, $N_3$, $N_4$, L, $M_v$ and Q are all positive integers

S220, receiving, by a
network device,
the first UCI

FIG. 3

FD basis vector 0
(the strongest coefficient)

Layer 1

...    -2    -1    0    -1    -2    ...    FD component

FD basis vector 0
(the strongest coefficient)

Layer 2

...    -2    -1    0    -1    -2    ...    FD component

Window size $N_3$

FIG. 4

Terminal device 300

Communication unit 310

FIG. 5

Network device 400

Communication unit 410

FIG. 6

Communication device 500

Memory 520

Processor 510

Transceiver 530

FIG. 7

FIG. 8

FIG. 9

## INTERNATIONAL SEARCH REPORT

| International application No. |
|---|
| **PCT/CN2022/143208** |

**A. CLASSIFICATION OF SUBJECT MATTER**

H04L27/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; 3GPP: 上行, 控制, 指示, 频域, 时域, 时变, 空间, 索引, 向量, 长度, 数量, 比特, 位图, 多普勒, UCI, FD, TD, SD, DFT, index, non-zero linear, matrix, PMI, CSI, indicate, bitmap

**C. DOCUMENTS CONSIDERED TO BE RELEVANT**

| Category* | Citation of document, with indication, where appropriate, of the relevant passages | Relevant to claim No. |
|---|---|---|
| Y | US 2020322027 A1 (NOKIA TECHNOLOGIES OY) 08 October 2020 (2020-10-08) description, paragraphs [0002]-[0013], [0040]-[0088] and [0111]-[0120] | 1, 5, 8, 48-51, 55, 58, 98-112 |
| Y | WO 2022257042 A1 (GUANGDONG OPPO MOBILE COMMUNICATIONS CO., LTD.) 15 December 2022 (2022-12-15) description, page 3, line 45-page 14, line 20 | 1, 5, 8, 48-51, 55, 58, 98-112 |
| Y | WO 2020222602 A1 (LG ELECTRONICS INC.) 05 November 2020 (2020-11-05) description, paragraphs 3-23 | 1, 5, 8, 48-51, 55, 58, 98-112 |
| A | US 2021075482 A1 (SAMSUNG ELECTRONICS CO., LTD.) 11 March 2021 (2021-03-11) entire document | 1-112 |
| Y | FRAUNHOFER IIS et al. "Email discussion summary for [RAN-R18-WS-eMBB-Fraunhofer]" *3GPP tsg_ran\tsg_ran Rel-18 workshop RWS-210523*, 26 June 2021 (2021-06-26), section 2.1 | 1, 5, 8, 48-51, 55, 58, 98-112 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 August 2023** | **18 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 645 774 A1

| Patent document cited in search report | | | Publication date (day/month/year) | Patent family member(s) | | | Publication date (day/month/year) |
|---|---|---|---|---|---|---|---|
| US | 2020322027 | A1 | 08 October 2020 | US | 10848229 | B2 | 24 November 2020 |
| | | | | AU | 2023202461 | A1 | 11 May 2023 |
| | | | | KR | 20230093524 | A | 27 June 2023 |
| | | | | WO | 2020199222 | A1 | 08 October 2020 |
| | | | | CO | 2021014882 | A2 | 08 April 2022 |
| | | | | EP | 3720009 | A1 | 07 October 2020 |
| | | | | EP | 3720009 | B1 | 22 February 2023 |
| | | | | ES | 2945189 | T3 | 29 June 2023 |
| | | | | AU | 2019438745 | A1 | 25 November 2021 |
| | | | | AU | 2019438745 | B2 | 02 February 2023 |
| | | | | TW | 202046793 | A | 16 December 2020 |
| | | | | TWI | 762898 | B | 01 May 2022 |
| | | | | FI | 3720009 | T3 | 22 May 2023 |
| | | | | EP | 3949185 | A1 | 09 February 2022 |
| | | | | EP | 3949185 | A4 | 09 November 2022 |
| | | | | US | 2022255608 | A1 | 11 August 2022 |
| | | | | JP | 2022528682 | A | 15 June 2022 |
| | | | | KR | 20210125060 | A | 15 October 2021 |
| | | | | KR | 102545026 | B1 | 19 June 2023 |
| | | | | CA | 3134720 | A1 | 08 October 2020 |
| | | | | MX | 2021012144 | A | 04 August 2022 |
| | | | | SG | 11202110126 | YA | 28 October 2021 |
| | | | | US | 2021028846 | A1 | 28 January 2021 |
| | | | | US | 11336356 | B2 | 17 May 2022 |
| WO | 2022257042 | A1 | 15 December 2022 | None | | | |
| WO | 2020222602 | A1 | 05 November 2020 | None | | | |
| US | 2021075482 | A1 | 11 March 2021 | US | 2023208482 | A1 | 29 June 2023 |
| | | | | EP | 4026259 | A1 | 13 July 2022 |
| | | | | EP | 4026259 | A4 | 16 November 2022 |
| | | | | WO | 2021049873 | A1 | 18 March 2021 |
| | | | | KR | 20220057618 | A | 09 May 2022 |
| | | | | US | 11601169 | B2 | 07 March 2023 |

Form PCT/ISA/210 (patent family annex) (July 2022)